(19) Europäisches Patentamt
European Patent Office
Office européen des brevets

(11) EP 1 526 153 B1

(12) # EUROPÄISCHE PATENTSCHRIFT

(45) Veröffentlichungstag und Bekanntmachung des Hinweises auf die Patenterteilung:
**15.01.2014 Patentblatt 2014/03**

(21) Anmeldenummer: **04024513.6**

(22) Anmeldetag: **14.10.2004**

(51) Int Cl.:
***C08J 3/02*** *(2006.01)* ***C08K 3/00*** *(2006.01)*
***C08K 5/17*** *(2006.01)* ***C08G 77/14*** *(2006.01)*
***C08G 77/18*** *(2006.01)* ***C08G 77/24*** *(2006.01)*
***C08G 77/26*** *(2006.01)* ***C08G 77/28*** *(2006.01)*
***C08G 77/16*** *(2006.01)* ***C08K 5/544*** *(2006.01)*
***C08L 83/04*** *(2006.01)* ***C08L 83/08*** *(2006.01)*
***C08L 83/06*** *(2006.01)* ***C08K 9/06*** *(2006.01)*

(54) **Wässrige Polymerdispersionen**

Aqueous polymer dispersions

Dispersions aqueuses de polymère

(84) Benannte Vertragsstaaten:
**BE DE FR GB NL PL**

(30) Priorität: **22.10.2003 DE 10349082**

(43) Veröffentlichungstag der Anmeldung:
**27.04.2005 Patentblatt 2005/17**

(73) Patentinhaber: **Wacker Chemie AG**
**81737 München (DE)**

(72) Erfinder:
- **Gottschalk-Gaudig, Torsten, Dr.**
**84489 Burghausen (DE)**
- **Barthel, Herbert, Dr.**
**84547 Emmerting (DE)**
- **Scheim, Uwe, Dr.**
**01640 Coswig (DE)**

(74) Vertreter: **Budczinski, Angelika et al**
**Wacker Chemie AG**
**Zentralbereich Patente, Marken und Lizenzen**
**Hanns-Seidel-Platz 4**
**81737 München (DE)**

(56) Entgegenhaltungen:
**DE-A- 2 626 942** **DE-A- 2 641 699**
**US-A- 4 427 811**

EP 1 526 153 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft wässrige Dispersionen von Polymeren, die sich nach Entfernen von Wasser in Elastomere oder Harze überführen lassen, Verfahren zu deren Herstellung und deren Verwendung als Dicht-, Kleb- und Beschichtungsmassen.

Aus Umweltschutzgründen ist es geboten in chemischen Zubereitungen auf flüchtige organische Bestandteile zu verzichten. Deshalb finden immer mehr wässrige Systeme Verwendung.

Wässrige Dispersionen von Polymeren, insbesondere solche, die sich nach Entfernen von Wasser in Elastomere oder Harze überführen lassen, sind seit langem bekannt. Sie bestehen im wesentlichen aus einem linearen Polymer, einem Emulgator und Wasser. Darüber hinaus ist es bekannt noch weitere Stoffe wie Vernetzer, Haftvermittler, Vernetzungskatalysatoren und nichtverstärkende Füllstoffe zuzusetzen. Als Polymere werden solche mit reaktiven Endgruppen eingesetzt. Es können sowohl die fertigen Polymere direkt mit Wasser und Emulgator zu einer Emulsion verarbeitet werden oder es werden zunächst Ausgangsstoffe für die Polymere emulgiert, woran sich ggf. eine Emulsionspolymerisation, -polykondensation, -polyaddition, Strahlenvernetzung oder thermische Vernetzung anschließen kann. Die Polymeremulsion kann dann mit einer Vernetzerkomponente und Katalysatoren jeweils in Substanz oder als Emulsion sowie weiteren Bestandteilen, wie Füllstoffen, Haftvermittlern, etc. vermischt werden.

Wässrigen Dispersionen von Organopolysiloxanen werden bisher im allgemeinen durch organische Emulgatoren stabilisiert. Es werden kationaktive, anionaktive, ampholytische sowie nichtionische Emulgatoren verwendet. Als beispielhafte Schriften seien hier EP 365 439 A und EP 665 882 A genannt.

In US 4 221 688 und US 4 427 811 sind Siliconpolymeremulsionen beschrieben, die beim Entfernen von Wasser zu Elastomeren aushärten und durch anionische Emulgatoren stabilisiert werden. Zusätzlich enthalten diese Emulsionen kolloidales Siliciumdioxid zur Verbesserung der mechanischen Eigenschaften. Darüber hinaus werden in US 5 162 429 Siliconpolymeremulsionen bestehend aus mit anionischem Emulgator stabilisierter Emulsion des Polymers und mit anionischem Emulgator stabilisierter Dispersion von pyrogener Kieselsäure in Wasser beschrieben. Die pyrogene Kieselsäure dient hierbei als verstärkender Füllstoff.

Die bisher bekannten wässrigen Dispersionen von Polymeren, die sich nach Entfernen von Wasser in Elastomere überführen lassen, haben meist den Nachteil, dass sie schlechte Haftung auf Substraten erzielen, insbesondere dann, wenn Feuchtigkeit einwirkt. Dies wird auf den hohen Gehalt an Emulgator, der zur Erzeugung einer ausreichenden Lagerstabilität notwendig ist, zurückgeführt.

Pickering stellte um 1910 erstmals Paraffin-Wasser-Emulsionen her, die er nur durch Zusatz verschiedener Feststoffe, wie basisches Kupfersulfat, basisches Eisensulfat oder andere Metallsalze, stabilisierte. Diese Art von Emulsionen wird auch "Pickering-Emulsionen" genannt. Grundlegende Untersuchungen haben gezeigt, dass ein Charakteristikum für Pickering-Emulsionen ist, dass Feststoffpartikel an der Grenzfläche zwischen den beiden flüssigen Phasen angeordnet sind und dort eine Barriere gegen das Verschmelzen der Flüssigkeitströpfchen bilden.

In EP-A 1 433 749 wird die Herstellung teilhydrophober Partikel beschrieben, wobei diese z.B. zur Steuerung der Fließeigenschaften von wässrigen Beschichtungen eingesetzt werden können.

Gegenstand der Erfindung sind wässrige Dispersionen herstellbar unter Verwendung von

(A) Organosiliciumverbindungen, wobei es sich bei Komponente (A) zumindest zum Teil um kondensationsfähige Gruppen aufweisende Organosilicumverbindungen handelt,
(B) teilhydrophobierte Partikel, die zum Teil mit Wasser benetzbar sind, und einen mittleren Durchmesser von 1 - 5000 nm aufweisen,
(C) Wasser
(D) basischen Stickstoff aufweisenden Verbindungen und ggf. weiteren Stoffen.

Bevorzugt sind die erfindungsgemäßen Dispersionen im wesentlichen frei von herkömmlichen, bei Raumtemperatur und dem Druck der umgebenden Atmosphäre nicht-partikulären flüssigen und festen, rein organischen oberflächenaktiven Substanzen, wie nichtionischen, kationischen und anionischen Emulgatoren ("organische Emulgatoren").

Nicht-partikuläre Emulgatoren heißt hier keine Partikel und Kolloide, sondern Moleküle und Polymere, folgend der Definition von Molekülen, Polymeren, Kolloide und Partikel wie gegeben in Dispersionen und Emulsionen, G. Lagaly, O. Schulz, R. Zindel, steinkopff, Darmstadt 1997, ISBN 3-7985-1087-3, S.1-4.
Im allgemeinen weisen diese organischen Emulgatoren eine Größe kleiner 1 nm, eine Molmasse 10 000 g/Mol, einen Kohlenstoffgehalt > 50 Gew.-%, bestimmbar durch Elementaranalyse, sowie eine Mohs'sche Härte kleiner als 1 auf.
Zugleich weisen die Emulgatoren, von denen die erfindungsgemäßen Dispersionen im wesentlichen frei sind, zumeist eine Löslichkeit in Wasser bei 20°C und dem Druck der umgebenden Atmosphäre, also 900 bis 1100 hPa, homogen oder in Micellen-Form von größer 1 Gew.-% auf.

Die erfindungsgemäßen Dispersionen können solche organischen Emulgatoren bis zu einer maximalen Konzentration von kleiner als 0,1 mal, bevorzugt kleiner als 0,01 mal, besonders bevorzugt kleiner als 0,001 mal, insbesondere

kleiner als 0,0001 mal der kritischen Micellkonzentration dieser oberflächenaktiven Stoffe in der Wasserphase enthalten; dies entspricht einer Konzentration dieser oberflächenaktiven Substanzen, bezogen auf das Gesamtgewicht der erfindungsgemäßen Dispersion von kleiner 10 Gew.-%, bevorzugt kleiner 2 Gew.-%, besonders bevorzugt kleiner 1 Gew.-%, insbesondere 0 Gew.-%.

Bei Komponente (A) kann es sich um alle monomeren, oligomeren und polymeren Verbindungen handeln, die auch bisher dispergiert werden konnten, wobei diese Verbindungen linear, verzweigt oder cyclisch sein können. Bei Komponente (A) kann es sich um reaktive Verbindungen handeln, die nach Entfernen des Wassers in Elastomere und/oder Harze übergeführt werden können, oder um nichtreaktive Verbindungen, die nach Entfernen des Wassers unverändert vorliegen, wobei es sich bei Komponente (A) zumindest zum Teil um kondensationsfähige Gruppen aufweisende Organosiliciumverbindungen handelt.

Beispiele für Komponente (A) sind Organosiliciumverbindungen, wie Organo(poly)silane, Organo(poly)siloxane, Organo(poly)silazane und organo(poly)silcarbane; silylterminierte Derivate von Isocyanat terminierten Polyurethan-Präpolymeren, hergestellt durch Umsetzung von Polyolen mit Polyisocyanaten im Überschuss (z.B. erhältlich unter der Bezeichnung DESMOSEAL® von der Bayer AG, Deutschland).

Beispiele für Epoxyverbindungen sind Alkylenbisglycidylether, wie

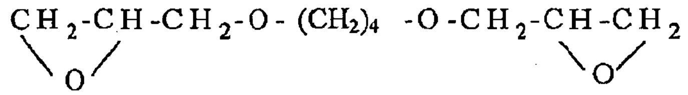

Bisphenol A basierende DiGlycidylether, wie

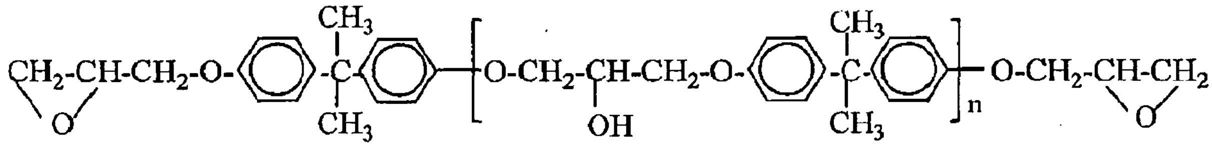

mit n bevorzugt von 0 bis 10, besonders bevorzugt 0 bis 5

Beispiele für Epoxy-Novolac-Harze, wie solche der Formel

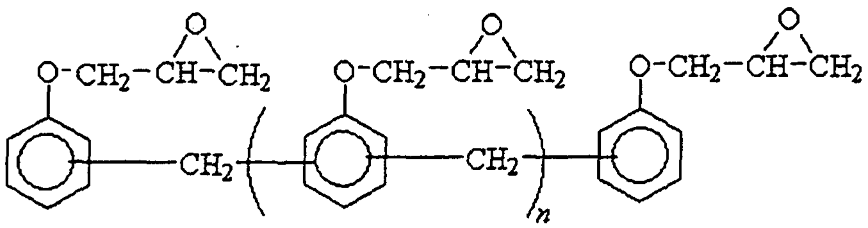

bifunktionelle Epoxyverbindungen, wie

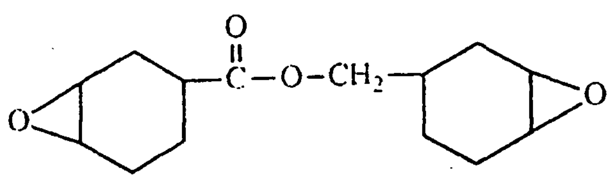

trifunktionelle Epoxyverbindungen, wie

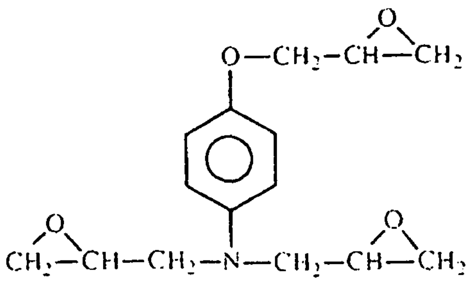

tetrafunktionelle Epoxyverbindungen, wie

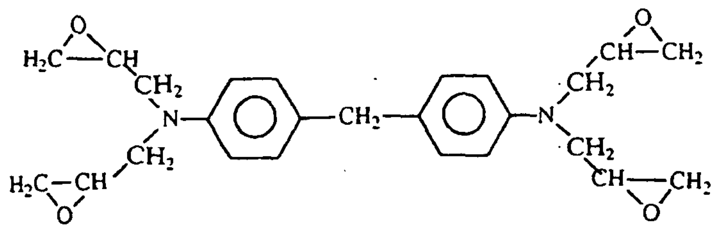

Die zur Herstellung der erfindungsgemäßen Dispersionen verwendete Komponente (A) ist bei Raumtemperatur und dem Druck der umgebenden Atmosphäre, also zwischen 900 und 1100 hPa, flüssig oder fest.

Falls die erfindungsgemäß eingesetzte Komponente (A) flüssig ist, hat sie eine Viskosität von bevorzugt 1 bis 10 000 000 $mm^2/s$, besonders bevorzugt von 100 bis 500 000 $mm^2/s$, im Besonderen bevorzugt von 1000 bis 350000 $mm^2/s$, jeweils bei 25°C.

Bei Komponente (A) handelt es sich um Organosiliciumverbindungen, besonders bevorzugt um solche enthaltend Einheiten der Formel

$$R_a(OR^1)_bX_cSiO_{(4-a-b-c)/2} \qquad (I),$$

wobei

R gleiche oder verschiedene SiC-gebundene Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind, bedeutet,

$R^1$ gleich oder verschieden sein kann und Wasserstoffatom oder gegebenenfalls substituierter Kohlenwasserstoffrest, der mit Sauerstoffatomen unterbrochen sein kann, bedeutet,

X gleich oder verschieden sein kann und Halogenatom, Pseudohalogenrest, Si-N-gebundene Aminreste, Amidreste, Oximreste, Aminoxyreste und Acyloxyreste bedeutet,

a 0, 1, 2 oder 3, bevorzugt 1 oder 2, ist,

b 0, 1, 2 oder 3 ist, bevorzugt 0, 1 oder 2, und

c 0, 1, 2 oder 3, bevorzugt 0 oder 1, besonders bevorzugt 0, ist, mit der Maßgabe, dass die Summe aus a+b+c kleiner oder gleich 4 ist.

Bei den erfindungsgemäß als Komponente (A) eingesetzten Organosiliciumverbindungen kann es sich sowohl um Silane handeln, d.h. Verbindungen der Formel (I) mit a+b+c=4, als auch um Siloxane, d.h. Verbindungen enthaltend Einheiten der Formel (I) mit $a+b+c \leq 3$. Vorzugsweise handelt es sich bei den erfindungsgemäß eingesetzten Organosiliciumverbindungen enthaltend Einheiten der Formel (I) um Organopolysiloxane, insbesondere um solche, die aus Einheiten der Formel (I) bestehen.

Beispiele für Kohlenwasserstoffreste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; Aralkylreste, wie der Benzylrest, der

alpha- und der beta-Phenylethylrest.

Beispiele für substituierte Kohlenwasserstoffreste R sind halogenierte Reste wie der 3-Chlorpropylrest, der 3,3,3-Trifluorpropylrest, Chlorphenylreste, Hexafluorpropylreste, wie der 1-Trifluormethyl-2,2,2-trifluorethylrest; der 2-(Perfluorhexyl)-ethylrest, der 1,1,2,2-Tetrafluorethyloxypropylrest, der 1-Trifluormethyl-2,2,2-trifluorethyloxypropylrest, der Perfluorisopropyloxyethylrest, der Perfluorisopropyloxypropylrest; durch Aminogruppen substituierte Reste, wie der N-(2-aminoethyl)-3-aminopropylrest, der 3-Aminopropylrest, der 3-(Cyclohexylamino)propylrest, der Aminomethylrest, der Cyclohexylaminomethylrest und der Diethylaminomethylrest; etherfunktionelle Reste, wie der 3-Methoxypropylrest, der Methoxymethylrest, der 3-Ethoxypropylrest und der Acetoxymethylrest; cyahofunktionelle Reste, wie der 2-Cyanoethylrest; esterfunktionelle Reste, wie der Methacryloxypropylrest; epoxyfunktionelle Reste, wie der Glycidoxypropylrest und schwefelfunktionelle Reste, wie der 3-Mercaptopropylrest.

Bevorzugt als Reste R sind Kohlenwasserstoffreste mit 1 bis 10 Kohlenstoffatomen, wobei besonders bevorzugt mindestens 80 %, insbesondere mindestens 90 %, der Reste R Methylreste sind.

Beispiele für Reste $R^1$ sind die für Rest R angegebenen Beispiele.

Bevorzugte Reste $R^1$ sind Wasserstoffatom und Alkylgruppen mit 1 bis 6 Kohlenstoffatomen, besonders bevorzugt Wasserstoffatom und Methyl- sowie Ethylreste, insbesondere Wasserstoffatom.

Beispiele für X sind Halogenatome, wie Chloratome, Bromatome, Pseudohalogenide, wie -CN und -OCN, Aminreste wie Diethylaminound Cyclohexylaminorest, Amidreste wie N-Methylacetamido- und Benzamidorest, Aminoxyreste wie Diethylaminoxyrest und Acyloxyreste wie der Acetoxyrest, wobei Chloratome bevorzugt sind.

Bei der Komponente (A) handelt es sich um handelsübliche Stoffe bzw. können nach in der organischen bzw. siliciumorganischen Chemie gängigen Methoden hergestellt werden.

Bei der erfindungsgemäß eingesetzten Komponente (B) handelt es sich um zum Teil mit Wasser benetzbare Partikel, d.h. die nicht vollständig mit Wasser benetzbar sind und nicht vollständig Wasser-unbenetzbar sind.

Bei der erfindungsgemäß eingesetzten Komponente (B) handelt es sich um bei Raumtemperatur und dem Druck der umgebenden Atmosphäre, also zwischen 900 und 1100 hPa, feste Partikel.

Die Partikel der erfindungsgemäß eingesetzten Komponente (B) weisen bevorzugt eine Löslichkeit in Wasser bei pH 7,33 und einem Elektrolythintergrund von 0,11 Mol und einer Temperatur von 37°C von kleiner 0,1 g/l, besonders bevorzugt von kleiner als 0,05 g/l, auf, bei dem Druck der umgebenden Atmosphäre, also zwischen 900 und 1100 hPa.

Die erfindungsgemäß eingesetzten Partikel (B) weisen einen mittleren Durchmesser von 1 bis 5000 nm auf, jeweils gemessen bevorzugt mittels dynamischer Lichtstreuung.

Bevorzugt weisen die erfindungsgemäß eingesetzten Partikel (B) eine Molmasse größer 10 000 g/Mol, besonders bevorzugt eine Molmasse von 50 000 bis 50 000 000 g/Mol, insbesondere von 100 000 bis 10 000 000 g/Mol, auf, jeweils gemessen bevorzugt mittels statischer Lichtstreuung.

Bevorzugt weisen die erfindungsgemäß eingesetzten Partikel (B) eine spezifische BET-Oberfläche von 30 bis 500 $m^2$/g, besonders bevorzugt 100 bis 300 $m^2$/g, auf. Die BET-Oberfläche wird nach bekannten Verfahren gemessen, bevorzugt gemäß Deutscher Industrie Norm DIN 66131 und DIN 66132.

Bevorzugt weisen die erfindungsgemäß eingesetzten Partikel (B) einen Kohlenstoffgehalt von kleiner 50 Gewichtsprozent auf.

Bevorzugt weisen die erfindungsgemäß eingesetzten Partikel (B) eine Mohs'sche Härte größer als 1, besonders bevorzugt größer als 4, auf.

Vorzugsweise handelt es sich bei der erfindungsgemäß eingesetzten Komponente (B) um Partikel mit einem Kontaktwinkel THETA von 0 bis 180°, besonders bevorzugt 30 bis 150°, insbesondere 45 bis 135°, jeweils gemessen an der Phasengrenze Wasser-Luft bei einer Temperatur von 25°C und dem Druck der umgebenden Atmosphäre, also zwischen 900 und 1100 hPa.

Vorzugsweise weisen die Partikel (B) eine Oberflächenenergie gamma von 30 bis 72,5 mJ/$m^2$ auf bei einer Temperatur von 25°C und dem Druck der umgebenden Atmosphäre, also zwischen 900 und 1100 hPa.

Vorzugsweise weisen die erfindungsgemäß eingesetzten Partikel (B) einen Dispersions-Anteil der Oberflächenenergie gamma-s-D von 40 bis 80 mJ/$m^2$, bevorzugt 50 bis 70 mJ/$m^2$, besonders besonders bevorzugt 60 bis 70 mJ/$m^2$ auf, bei einer Temperatur von 25°C und dem Druck der umgebenden Atmosphäre, also zwischen 900 und 1100 hPa. Gemessen wird der Dispersions-Anteil der Oberflächenenergie gamma-s-D zum Beispiel gemäß "Inverse Gaschromatographie"-"Characterisation of Polymers and other Materials", 391 ACS Symposium Series, D R Lloyd, Th C Ward, H P Schreiber, Chapter 18, pp 248-261, ACS, Washington DC 1989, ISBN 0-8412-1610-X.

Beispiele für die erfindungsgemäß eingesetzte Komponente (B) sind Silikate, Aluminate, Titanate, Aluminiumschichtsilikate, wie Bentonite, wie Montmorillonite, Smektite und Hektorite; Metalloxide, wie Silicium-, Aluminium-, Titan-, Nickel-, Cobalt-, Eisen-, Mangan-, Chrom- und Vanadiumoxide; Ruße, wie Flammruße, Ofenruße, sogenannte Furnace-Ruße und sogenannte "Carbon Black"-Ruße; und Nitride und Carbide, wie Bornitrid, Borcarbid, Siliciumnitrid und Siliciumcarbid, mit der Maßgabe, dass die genannten zum Teil mit Wasser benetzbar sind.

Bevorzugt handelt es sich bei Komponente (B) um anorganische, zum Teil mit Wasser benetzbare Oxide, insbesondere um Metalloxide mit einem kovalenten Bindungs-Anteil in der Metall-Sauerstoff-Bindung, wie z.B. feste

Oxide der Haupt- und Nebengruppenelemente, wie der 3. Hauptgruppe, wie Bor-, Aluminium-, Gallium- und Indiumoxid, der 4. Hauptgruppe wie Siliciumdioxid, Germaniumdioxid, und Zinnoxid sowie -dioxid, Bleioxid und - dioxid, und ein Oxid der 4. Nebengruppe, wie Titandioxid, Zirkonoxid und Hafniumoxid.

Bevorzugt handelt es sich bei den erfindungsgemäß eingesetzten, zum Teil mit Wasser benetzbaren Metalloxiden (B) um Aluminium(III)-, Titan(IV)- und Silicium(IV)oxide, wie nasschemisch hergestellte, beispielsweise gefällte Kieselsäuren oder Kieselgele, oder in Prozessen bei erhöhter Temperatur hergestellte Aluminiumoxide, Titandioxide oder Siliciumdioxide, wie zum Beispiel pyrogen hergestellte Aluminiumoxide, Titandioxide oder Siliciumdioxide oder Kieselsäuren, wobei zum Teil mit Wasser benetzbare Kieselsäure besonders bevorzugt ist.

Im Rahmen der vorliegenden Erfindung soll die Bezeichnung Kieselsäure wie auch Siliciumdioxid als unter den Oberbegriff "Metalloxid" fallend betrachtet werden.

Die bevorzugte Ausgangs-Kieselsäure, aus der die in den erfindungsgemäßen Dispersionen eingesetzte, zum Teil mit Wasser benetzbare Kieselsäure hergestellt wird, kann auf beliebige an sich bekannte Weise, wie beispielsweise in einer Flammenreaktion aus Halogen-siliciumverbindungen hergestellt werden, z.B. aus Siliciumtetrachlorid oder Halogen-Organosiliciumverbindungen wie Methylchlorsilanen, wie Methyltrichlorsilan, oder Hydrogenchlorsilanen wie Hydrogentrichlorsilan oder anderen Hydrogenmethylchlorsilanen, wie Hydrogenmethyldichlorsilan oder Alkylchlorsilanen, auch im Gemisch mit Kohlenwasserstoffen, oder beliebigen versprühbaren und, bevorzugt, verflüchtigbaren Gemischen aus Organosiliciumverbindungen, wie genannt, und Kohlenwasserstoffen, wobei es sich bei der Flamme um eine Wasserstoff-Sauerstoff-Flamme oder auch eine Kohlenmonoxid-Sauerstoff-Flamme handeln kann. Die Herstellung der Kieselsäure kann dabei wahlweise mit und ohne zusätzlichem Zusatz von Wasser erfolgen, zum Beispiel im Schritt der Reinigung; bevorzugt ist kein Zusatz von Wasser.

Bevorzugt werden zur Herstellung der erfindungsgemäßen Dispersionen als Komponente (B) teilhydrophobierte, besonders bevorzugt teilsilylierte, Feststoffpartikel eingesetzt, insbesondere solche, die an ihrer Oberfläche OH-Gruppen tragen.

Teilweise silyliert bedeutet hier, dass weder die gesamte Partikel-Oberfläche unsilyliert ist, noch dass die gesamte Partikel-Oberfläche silyliert ist.

Der Bedeckungsgrad $\tau$ der Oberfläche der Feststoffpartikel mit Silyliermittelresten ist dabei, bezogen auf die Gesamt-Partikel-Oberfläche, bevorzugt 5 bis 95 %, besonders bevorzugt 5 bis 50 %, insbesondere 10 bis 30 %.

Die Bedeckung mit Silyliermittel kann dabei beispielsweise mittels Elementaranalyse, wie z.B. über den Kohlenstoffgehalt, ermittelt werden oder durch Bestimmung des Rest-Gehaltes an reaktiven Oberflächen-OH-Gruppen des Partikels.

Für pyrogenes Siliciumdioxid bedeutet Teilsilylierung hier, dass der Gehalt an nicht-silylierten Oberflächensilanolgruppen an der Siliciumdioxidoberfläche sich zwischen bevorzugt maximal 95 % und minimal 5 %, besonders bevorzugt von 95 bis 50 %, insbesondere 90 bis 70 %, des Ausgangs-Siliciumdioxids bewegt.

Dies bedeutet, dass die Dichte der Oberflächensilanolgruppen SiOH sich vorzugsweise zwischen minimal 0,1 und maximal 1,7, bevorzugt von 0,9 bis 1,7, besonders bevorzugt von 1,25 bis 1,6, SiOH pro $nm^2$ Partikeloberfläche bewegt.

Für ein Ausgangs-Siliciumdioxid von 200 $m^2/g$ spezifischer Oberfläche, das zur Silylierung herangezogen werden kann, bedeutet dies vorzugsweise zwischen minimal 0,03 mMol/g SiOH und maximal 0,57 mMol/g SiOH, bevorzugt 0,3 bis 0,57 mMol/g SiOH, besonders bevorzugt 0,42 bis 0,54 mMol/g SiOH; für ein Siliciumdioxid mit geringerer bzw. größerer Oberfläche bedeutet dies linear proportional mehr oder weniger Oberflächensilanolgruppen SiOH.

Verfahren zur Teilhydrophobierung bzw. Teilsilylierung von Feststoffpartikel sind bereits bekannt.

Vorzugsweise weist die Ausgangs-Kieselsäure eine spezifische BET-Oberfläche von 25 bis 500 $m^2/g$ auf. Die Ausgangs-Kieselsäure weist vorzugsweise Aggregate (Definition nach DIN 53206) im Bereich von Durchmessern 100 bis 1000 nm auf, wobei die Kieselsäure aus Aggregaten aufgebaute Agglomerate (Definition nach DIN 53206) aufweist, die in Abhängigkeit von der äußeren Scherbelastung (z.B. Messbedingungen) Größen von 1 bis 500 $\mu m$ aufweisen.

Vorzugsweise weist die Ausgangs-Kieselsäure eine fraktale Dimension der Oberfläche von vorzugsweise kleiner oder gleich 2,3 auf, wobei die fraktale Dimension der Oberfläche $D_s$ hierbei definiert ist als: Partikel-Oberfläche A ist proportional zum Partikel-Radius R hoch $D_s$. Vorzugsweise weist die Ausgangs-Kieselsäure eine Dichte an zugänglichen, d.h. einer chemischen Reaktion zugänglichen, Oberflächen-Silanolgruppen SiOH von bevorzugt 1,5 bis 2,5 SiOH pro $nm^2$ spezifischer Oberfläche, besonders bevorzugt 1,6 bis 2,0 SiOH pro $nm^2$, auf.

Zur Herstellung der erfindungsgemäß eingesetzten Komponente (B) können als Ausgangs-Kieselsäuren bei hoher Temperatur (größer 1000°C) hergestellte Kieselsäuren eingesetzt werden, wobei pyrogen hergestellte Kieselsäuren besonders bevorzugt sind. Es können hydrophile Kieselsäuren eingesetzt werden, die frisch hergestellt direkt aus dem Brenner kommen, zwischengelagert oder bereits handelsüblich verpackt sind.

Als Ausgangs-Kieselsäuren können unverdichtete, mit Stampf- oder Klopfdichten kleiner 60 g/l, aber auch verdichtete, mit Stampf- oder Klopfdichten größer 60 g/l, Kieselsäuren eingesetzt werden.

Als Ausgangs-Kieselsäuren können Gemische aus verschiedenen Kieselsäuren eingesetzt werden, so z.B. Mischungen aus Kieselsäuren unterschiedlicher BET-Oberfläche.

Bevorzugt können zur Silylierung von Feststoffpartikeln Organosiliciumverbindungen, wie z.B.

(i) Organosilane bzw. Organosilazane der Formel

$$R^2_dSiY_{4-d} \qquad (II)$$

und/oder deren Teilhydrolysate,
wobei
$R^2$ gleich oder verschieden sein kann und einen einwertigen, gegebenenfalls substituierten Kohlenwasserstoffrest mit 1 bis 24 Kohlenstoff-Atomen, der durch Sauerstoffatome unterbrochen sein kann, bedeutet,
d gleich 1, 2 oder 3 bedeutet und
Y gleich oder verschieden sein kann und Halogenatom, einwertige Si-N-gebundene Stickstoffreste, an den ein weiterer Silylrest gebunden sein kann, $-OR^3$ oder $-OC(O)OR^3$ bedeutet, wobei $R^3$ gleich Wasserstoffatom oder ein einwertiger, gegebenenfalls substituierter Kohlenwasserstoffrest, der durch Sauerstoffatome unterbrochen sein kann, bedeutet,
oder
(ii) lineare, verzweigte oder cyclische Organosiloxane aus Einheiten der Formel

$$R^4e(OR^5)_fSiO_{(4-e-f)/2} \qquad (III),$$

wobei
$R^4$ gleich oder verschieden sein kann und eine der oben für $R^2$ angegebenen Bedeutungen hat,
$R^5$ gleich oder verschieden sein kann und eine für $R^1$ angegebene Bedeutung hat,
e 0, 1, 2 oder 3 ist und
f 0, 1, 2, 3 ist, mit der Maßgabe dass die Summe $e+f \leq 3$ ist,
oder
Gemische aus (i) und (ii)
eingesetzt werden.

Bei den Organosiliciumverbindungen, die zur Silylierung der Feststoffpartikel eingesetzt werden können, kann es sich beispielsweise um Gemische aus Silanen oder Silazanen der Formel (II) handeln, wobei solche aus Methyl-Chlorsilanen einerseits oder Alkoxysilanen und gegebenenfalls Disilazanen andererseits bevorzugt sind.

Beispiele für $R^2$ sind die für R oben angegebenen Reste, wobei es sich bevorzugt um den Methyl-, Octyl- und Vinylrest handelt, besonders bevorzugt um den Methylrest.

Beispiele für $R^3$ sind die für R oben angegebenen Reste, wobei es sich bevorzugt um den Methyl- und Ethylrest handelt.

Beispiele für Organosilane der Formel (I) sind Alkylchlorsilane, wie Methyltrichlorsilan, Dimethyldichlorsilan, Trimethylchlorsilan, Octylmethyldichlorsilan, Octyltrichlorsilan, Octadecylmethyldichlorsilan und Octadecyltrichlorsilan, Methylmethoxysilane, wie Methyltrimethoxysilan, Dimethyldimethoxysilan und Trimethylmethoxysilan, Methylethoxysilane, wie Methyltriethoxysilan, Dimethyldiethoxysilan und Trimethylethoxysilan, Methylacetoxysilane, wie Methyltriacetoxysilan, Dimethyldiacetoxysilan und Trimethylacetoxysilan, Vinylsilane, wie Vinyltrichlorsilan, Vinylmethyldichlorsilan, Vinyldimethylchlorsilan, Vinyltrimethoxysilan, Vinylmethyldimethoxysilan, Vinyldimethylmethoxysilan, Vinyltriethoxysilan, Vinylmethyldiethoxysilan und Vinyldimethylethoxysilan, Disilazane wie Hexamethyldisilazan, Divinyltetramethyldisilazan und Bis(3,3,3-trifluorpropyl)tetramethyldisilazan, Cyclosilazane wie Octamethylcyclotetrasilazan, und Silanole wie Trimethylsilanol.

Bevorzugt ist Methyltrichlorsilan, Dimethyldichlorsilan und Trimethylchlorsilan oder Hexamethyldisilazan.

Beispiele für Organosiloxane der Formel (III) sind lineare oder cyclische Dialkylsiloxane mit einer mittleren Anzahl an Dialkylsiloxyeinheiten von größer als 3. Die Dialkylsiloxane sind bevorzugt Dimethylsiloxane. Besonders bevorzugt sind lineare Polydimethylsiloxane mit folgenden Endgruppen: Trimethylsiloxy-, Dimethylhydroxysiloxy-, Dimethylchlorsiloxy-, Methyldichlorsiloxy-, Dimethylmethoxysiloxy-, Methyldimethoxysiloxy-, Dimethylethoxysiloxy-, Methyldiethoxysiloxy-, Dimethylacetoxysiloxy-, Methyldiacetoxysiloxy- und Dimethylhydroxysiloxygruppen, insbesondere mit Trimethylsiloxy- oder Dimethylhydroxysiloxyendgruppen.

Bevorzugt haben die genannten Polydimethylsiloxane eine Viskosität bei 25°C von 2 bis 100 mPas.

Weitere Beispiele für Organosiloxane sind Siliconharze, im besonderen solche, die als Alkylgruppe Methylgruppen enthalten, wobei es sich besonders bevorzugt um solche handelt, die $R^4_3SiO_{1/2}$ und $SiO_{4/2}$-Einheiten enthalten oder solche, die $R^4SiO_{3/2}$ und gegebenenfalls $R^4_2SiO_{2/2}$-Einheiten enthalten, wobei $R^4$ eine der oben genannten Bedeutungen hat.

Bevorzugt haben die genannten Siliconharze aus Einheiten der Formel (III) eine Viskosität bei 25°C von 500

bis 5000 $mm^2/s$.

Bei Siliconharzen mit einer Viskosität von größer als 1000 $mm^2/s$ bei 25°C sind solche bevorzugt, die sich in einem technisch gut handhabbaren Lösungsmittel, wie vorzugsweise Alkohole wie Methanol, Ethanol, iso-Propanol, Ether wie Diethylether, Tetrahydrofuran, Siloxane wie Hexamethyldisiloxan, Alkane wie Cyclohexan oder n-Octan, Aromaten wie Toluol oder Xylol, mit einer Konzentration über 10 Gew.-% und einer Mischungsviskosität kleiner als 1000 $mm^2/s$ bei einer Temperatur von 25°C und dem Druck der umgebenden Atmosphäre lösen lassen.

Unter den festen Organosiloxanen sind solche bevorzugt, die sich in einem technisch handhabbaren Lösungsmittel (wie oben definiert) mit einer Konzentration größer als 10 Gew.% und einer Mischungsviskosität kleiner als 1000 $mm^2/s$ bei einer Temperatur von 25°C lösen.

Bei den zur Herstellung der erfindungsgemäß eingesetzten Komponente (B) verwendeten Stoffe kann es sich jeweils um eine einzelne Art wie auch um ein Gemisch aus mindestens zwei Arten derartiger Stoffe handeln.

Ein bevorzugtes Verfahren zur Herstellung der erfindungsgemäßen Komponente (B) soll im Folgenden anhand des bevorzugten Ausgangsprodukts Kieselsäure beschrieben werden, wobei pyrogene Kieselsäuren besonders bevorzugt eingesetzt.

Die Hydrophobierung und Silylierung, die zur Herstellung der erfindungsgemäß eingesetzten Komponente (B) bevorzugt durchgeführt wird, kann als diskontinuierliche Reaktion, d.h. im Batch-Verfahren, oder als kontinuierliche Reaktion durchgeführt werden, wobei die kontinuierliche Reaktion bevorzugt ist.

Die Hydrophobierung und Silylierung kann in einem Schritt realisiert werden oder in 2 oder 3 aufeinanderfolgenden Schritten. Das heißt, der Reaktion kann eine Beladung (Physisorption des Silyliermittels) vorgeschaltet sowie der Reaktion vorzugsweise ein Reinigungsschritt nachgeschaltet sein. Bevorzugt sind 3 suksessive Schritte: (1) Beladung - (2) Reaktion - (3) Reinigung.

Die Beladungstemperatur liegt bei vorzugsweise -30 bis 350°C, bevorzugt 20 bis 120°C.

Die Reaktionstemperaturen reichen vorzugsweise von 50 bis 400°C, besonders bevorzugt von 50 bis 330°C.

Die Reaktionszeiten dauern vorzugsweise von 1 Minute bis 24 Stunden, bevorzugt 30 Minuten bis 4 Stunden.

Der Reaktionsdruck liegt vorzugsweise im Bereich Normaldruck, d.h. zwischen 900 und 1100 hPa.

Die Reinigungstemperatur reicht vorzugsweise von 100 bis 400°C.

Eine effektive Bewegung und Durchmischung von Kieselsäure und Silyliermittel während Schritte (1) Beladung, (2) Reaktion und Reinigung (3) ist notwendig. Dies erfolgt bevorzugt durch mechanische oder gasgetragene Fluidisierung. Eine gasgetragene Fluidisierung kann durch alle inerten Gase erfolgen, die nicht zu Nebenreaktionen, Abbaureaktionen, Oxidationsvorgängen und Flammen- und Explosionserscheinungen führen. Die Leerrohrgasgeschwindigkeit ist hierbei von 0,05 bis 5 cm/s, besonders bevorzugt von 0,05 bis 1 cm/s. Mechanische Fluidisierung kann durch Flügelrührer, Ankerrührer und sonstige geeignete Rührorgane erfolgen.

In einer besonders bevorzugten Ausführung wird nur die Gasmenge zugeführt, die zur Aufrechterhaltung einer sauerstoffarmen Atmosphäre ausreicht, bevorzugt weniger als 5 Vol.-%, die Fluidisierung erfolgt dann rein mechanisch.

Die Reaktion wird bevorzugt in einer Atmosphäre durchgeführt, die nicht zur Oxidation der silylierten Kieselsäure führt, d.h. bevorzugt weniger als 10 Vol.-% Sauerstoff, besonders bevorzugt sind weniger als 2,5 Vol.-%, wobei beste Ergebnisse bei weniger als 1 Vol.-% Sauerstoff erzielt werden.

Es erfolgt ein effektives Einbringen der Silyliermittel in die Kieselsäure. Handelt es sich bei den Silyliermitteln bei Applikationstemperatur um flüssige Verbindungen, werden bevorzugt effektive Verdüsungstechniken eingesetzt. Verdüsen in 1-Stoffdüsen unter Druck (5 bis 20 bar), Versprühen in 2-Stoffdüsen unter Druck (Gas und Flüssigkeit 2 bis 20 bar), Feinstverteilen mit Atomizern, etc.

Bevorzugt wird das Silyliermittel als feinstverteiltes Aerosol zugefügt, wobei das Aerosol eine Sinkgeschwindigkeit von vorzugsweise 0,1 bis 20 cm/s und eine Tropfengröße mit einem aerodynamischen Äquivalentdurchmesser von 5 bis 25 $\mu$m aufweist.

Wahlweise können vorzugsweise protische Lösemittel hinzugefügt werden, wie flüssige oder verdampfbare Alkohole oder Wasser; typische Alkohole sind iso-Propanol, Ethanol und Methanol. Es können auch Gemische der oben genannten protischen Lösemittel zugefügt werden. Bevorzugt werden keine protischen Lösemittel zugesetzt.

Wahlweise können vorzugsweise saure oder basische Katalysatoren zugesetzt werden. Diese Katalysatoren können basischen Charakters sein, im Sinne einer Lewis Base oder einer Brönsted Base, wie Ammoniak, oder sauren Charakters sein, im Sinne einer Lewis Säure oder einer Brönsted Säure, wie Chlorwasserstoff. Falls Katalysatoren eingesetzt werden, handelt es sich bevorzugt um Spuren, d.h weniger als 1000 ppm. Besonders bevorzugt werden keine Katalysatoren zugesetzt.

Der Reinigungsschritt ist durch Bewegung gekennzeichnet, wobei langsame Bewegung und geringes Durchmischen bevorzugt ist.

Der Reinigungsschritt ist weiterhin durch erhöhten Gaseintrag gekennzeichnet, entsprechend einer Leerrohrgasgeschwindigkeit von 0,001 bis 10 cm/s.

Zusätzlich kann der Reinigungsschritt ein Mischen mit mechanischen Rührorganen beinhalten. Die Rührorgane werden dabei so eingestellt und bewegt, dass bevorzugt Mischen und Fluidisieren, jedoch nicht völlige Verwirbelung

eintritt.

Zusätzlich können während des Silylierschrittes Verfahren zur mechanischen Verdichtung eingesetzt werden, wie zum Beispiel Presswalzen, Kugelmühlen, Kollergänge, Schraubenverdichter und Brikettierer.

Zusätzlich können vor, während oder nach des Silylierungsschrittes Verfahren zur Desagglomerierung der Kieselsäure eingesetzt werden, wie Stiftmühlen oder Vorrichtungen zur Mahlsichtung und/oder Verfahren zur mechanischen Verdichtung der Kieselsäure, wie zum Beispiel Presswalzen, oder Verdichten durch Absaugen des Luft- oder Gasinhaltes durch geeignete Vakuummethoden oder andere Verfahren zur mechanischen Verdichtung wie zum Beispiel Presswalzen, Kugelmühlen, Kollergänge, Schraubenverdichter und Brikettierer.

Bevorzugt weisen die erfindungsgemäß als Komponente (B) eingesetzten Kieselsäuren eine BET-Oberfläche von 170 bis 230 $m^2/g$ und einen Kohlenstoffgehalt von 0,1 bis 3 Gewichtsprozent, vorzugsweise von 0,1 bis 1,5 Gewichtsprozent, insbesondere von 0,1 bis 1 Gewichtsprozent, ganz besonders bevorzugt von 0,1 bis 0,7 Gewichtsprozent, auf, jeweils bestimmbar bevorzugt durch Elementaranalyse.

Die Herstellung der erfindungsgemäß eingesetzten Komponente (B) kann auch in situ bei der Herstellung der erfindungsgemäßen Dispersionen erfolgen.

Die erfindungsgemäßen Dispersionen enthalten Komponente (B) in-Mengen von bevorzugt 0,1 bis 50 Gewichtsteilen, besonders bevorzugt 1 bis 15 Gewichtsteilen, insbesondere 2 bis 10 Gewichtsteilen, bezogen auf 100 Gewichtsteile gesamte Dispersion.

Bei den gegebenenfalls eingesetzten weiteren Stoffen handelt es sich um beliebige Stoffe, die auch bisher in wässrigen Dispersionen eingesetzt werden, wie z.B. Füllstoffe, Vernetzungskatalysatoren, Pigmente, Fungicide, Rheologiehilfsmittel, Vernetzer und Katalysatoren.

Bei den erfindungsgemäß eingesetzten Komponenten kann es sich jeweils um eine einzelne Art wie auch um ein Gemisch aus mindestens zwei Arten derartiger Komponenten handeln.

Die erfindungsgemäßen Dispersionen haben einen Feststoffgehalt von bevorzugt 50 bis 99,9 Gew.-%, besonders bevorzugt 70 bis 95. Gew.-%, insbesondere 80 bis 95 Gew.-%

Bevorzugt handelt es sich bei den erfindungsgemäßen wässrigen Dispersionen um solche, herstellbar unter Verwendung der Ausgangsstoffe

(A) Organosiliciumverbindungen enthaltend Einheiten der Formel (I)
(B) teilhydrophobierte Partikel, die zum Teil mit Wasser benetzbar sind, und einen mittleren Durchmesser von 1 - 5000 nm, aufweisen,
(C) Wasser,
gegebenenfalls
(D) basischen Stickstoff aufweisende Verbindungen,
gegebenenfalls
(E) Füllstoffe,
gegebenenfalls
(F) Vernetzungskatalysatoren
und gegebenenfalls
(G) Additive, wie Pigmente, Fungicide, Rheologiehilfsmittel und Katalysatoren.

Bei der erfindungsgemäß eingesetzten Komponente (A) handelt es sich bevorzugt um (A1) kondensationsfähige Gruppen aufweisendes Organopolysiloxan bevorzugt im Gemisch mit (A2) Organopolysiloxanharz, welches ggf. kondensationsfähige Gruppen aufweist, oder kondensationsfähige Gruppen aufweisendes Organosilan und/oder dessen Teilhydrolysate.

Im Rahmen der vorliegenden Erfindung soll der Begriff "kondensationsfähig" auch eine gegebenenfalls vorausgehende Hydrolyse mitumfassen.

Die erfindungsgemäß eingesetzten, kondensationsfähige Gruppen aufweisenden Organopolysiloxane (A1) sind vorzugsweise solche enthaltend Einheiten der Formel (I), mit der Maßgabe, dass die Summe aus $a+b+c \leq 3$ ist und pro Molekül mindestens eine Einheit vorhanden ist mit b verschieden 0 und $R^1$ gleich Wasserstoffatom, besonders bevorzugt solche der Formel

$$HO-[SiR_2O]_n-H \qquad (IV),$$

worin
R gleich oder verschieden sein kann und eine der oben genannten Bedeutungen hat,
n eine ganze Zahl von mindestens 10, bevorzugt mindestens 30, besonders bevorzugt mindestens 100, ist.

Bevorzugt handelt es sich bei den erfindungsgemäß eingesetzten Organopolysiloxanen (A1) um $\alpha,\omega$-Dihydroxypolydimethylsiloxane.

Der Durchschnittswert für die Zahl n in Formel (IV) ist vorzugsweise so gewählt, dass das Organopolysiloxan (A1) der Formel (IV) eine Viskosität von 10 bis 250000 mPas, besonders bevorzugt von 1000 bis 100000 mPas, jeweils bei 25°C, besitzt.

Obwohl in Formel (IV) nicht angegeben, können bis zu 10 Molprozent der Diorganosiloxaneinheiten durch andere, meist jedoch nur als mehr oder weniger schwer vermeidbare Verunreinigungen vorliegende Siloxaneinheiten, wie $R_3SiO_{1/2}$-, $RSiO_{3/2}$- und $SiO_{4/2}$-Einheiten, ersetzt sein, wobei R die vorstehend dafür angegebene Bedeutung hat.

Die Polydiorganosiloxane gemäss Formel (IV) sind handelsübliche Produkte oder können nach in der Fachwelt bekannten Verfahren, beispielsweise durch Polymerisation bzw. Kondensation niedermolekularer cyclischer bzw. linearer, hydroxy- und/oder alkoxyendblockierter Organopolysiloxane, hergestellt werden.

Bei dem erfindungsgemäß eingesetzten Organopolysiloxanharz (A2) handelt es sich bevorzugt um solche aus Einheiten der allgemeinen Formel

$$(R^1O)_g R_h SiO_{(4-g-h)/2} \qquad (V),$$

wobei

R und $R^1$ unabhängig voneinander gleich oder verschieden sein können und eine der oben angegebenen Bedeutungen haben,

h 0, 1, 2 oder 3 ist und

g 0, 1, 2 oder 3 ist, mit der Maßgabe, dass die Summe aus g+h kleiner oder gleich 3 ist.

Bei dem erfindungsgemäß eingesetzten Organopolysiloxanharz (A2) handelt es sich bevorzugt um solches mit einem Molekulargewicht $M_w$ von 500 bis 100 000, bevorzugt von 1000 bis 20 000, und einer Viskosität von 10 bis 10 000 000 $mm^2/s$, besonders bevorzugt 1 000 bis 1 000 000 $mm^2/s$, insbesondere bevorzugt von 10 000 bis 500 000 $mm^2/s$, bei 25°C.

Obwohl durch die Formel (V) nicht ausgedrückt, kann das Organopolysiloxanharz, bedingt durch seine Herstellung, bis zu 10 Gewichtsprozent Si-gebundene Chloratome enthalten.

Das erfindungsgemäß eingesetzte Organopolysiloxanharz (A2) ist ein handelsübliches Produkt oder kann nach an sich bekannten Verfahren, wie beispielsweise durch Kondensation von niedermolekularen Organopolysiloxanharzen in Dispersion, hergestellt werden, wobei die niedermolekularen Organopolysiloxanharze darstellbar sind durch Solvolyse und Kondensation von einer Lösung der entsprechenden Silane mit Si-gebundenen Chloratomen in einem mit Wasser nicht mischbaren Lösungsmittel mittels eines Alkohol/Wasser-Gemisches.

Anstelle des als Komponente (A2) eingesetzten Organopolysiloxanharzes kann auch kondensationsfähige Gruppen aufweisendes Organosilan und/oder dessen Teilhydrolysate eingesetzt werden.

Beispiele für solche Organosilane sind alle Organosilane, die bereits bisher in durch Kondensation vernetzenden Organopolysiloxanmassen eingesetzt werden können, wie etwa Alkoxy-, Acetoxy- und Oximosilane.

Zur Herstellung der erfindungsgemäßen wässrigen Dispersionen von Organopolysiloxanen wird Organopolysiloxanharz (A2) in Mengen von vorzugsweise 0,1 bis 100 Gewichtsteilen, besonders bevorzugt 0,5 bis 35 Gewichtsteilen, insbesondere 2 bis 20 Gewichtsteilen, jeweils bezogen auf 100 Gewichtsteile kondensationsfähige Gruppen aufweisendes Organopolysiloxan (A1), eingesetzt.

Bei den erfindungsgemäß gegebenenfalls eingesetzten, basischen Stickstoff aufweisenden Verbindungen (D) handelt es sich vorzugsweise um solche, ausgewählt aus der Gruppe bestehend aus Verbindungen der Formel

$$NR^6_3 \qquad (VI),$$

wobei $R^6$ gleich oder verschieden sein kann und Wasserstoffatom oder Kohlenwasserstoffreste, die gegebenenfalls mit Hydroxygruppen, Halogenatomen, Aminogruppen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind, bedeutet, mit der Maßgabe, dass in Formel (VI) höchstens zwei $R^6$ die Bedeutung von Wasserstoffatom haben,

aliphatischen cyclischen Aminen, wie beispielsweise Piperidin und Morpholin sowie Organosiliciumverbindungen mit mindestens einem basischen Stickstoff aufweisenden organischen Rest aus Einheiten der Formel

$$R^7_k A_1 Si (OR^8)_m O_{(4-k-1-m)/2} \qquad (VII),$$

worin

$R^7$ gleich oder verschieden sein kann und einen einwertigen, SiC-gebundenen, von basischem Stickstoff freien organischen Rest bedeutet,

$R^8$ gleich oder verschieden sein kann und Wasserstoffatom, einen Alkylrest, Alkalimetallkation, Ammonium- oder Phosphoniumgruppe bedeutet,

A gleich oder verschieden sein kann und einen einwertigen, SiC-gebundenen Rest mit basischem Stickstoff bedeutet,
k 0, 1, 2, oder 3,
1 0, 1, 2, 3 oder 4 und
m 0, 1, 2 oder 3 ist,
mit der Maßgabe, dass die Summe aus k+l+m kleiner oder gleich 4 ist und pro Molekül mindestens ein Rest A anwesend ist.

Bei den gegebenenfalls substituierten Kohlenwasserstoffresten $R^6$ handelt es sich vorzugsweise um solche mit 1 bis 18 Kohlenstoffatomen.

Bei Rest $R^7$ handelt es sich vorzugsweise um Kohlenwasserstoffreste mit 1 bis 18 Kohlenstoffatomen, wobei der Methyl-, Ethylund Propylrest besonders bevorzugt ist, insbesondere der Methylrest.

Beispiele für Rest $R^6$ und $R^7$ sind jeweils unabhängig voneinander die für R angegebenen Beispiele für gegebenenfalls substituierte Kohlenwasserstoffreste.

Vorzugsweise handelt es sich bei Rest $R^8$ um Wasserstoffatom, Methyl-, Ethylrest und Alkalimetallkation, wobei Wasserstoffatom, Methyl-, Ethylrest, Natrium- und Kaliumkation besonders bevorzugt sind.

Beispiele für Rest $R^8$ sind die für Rest R angegebenen Kohlenwasserstoffreste, die Kationen der Alkalimetalle, wie die von Lithium, Natrium, Kalium, Rubidium und Cäsium, sowie Reste der Formel

$$^{+}NR^9_4 \qquad \text{(VIII)}$$

oder

$$^{+}PR^9_4 \qquad \text{(IX)},$$

wobei $R^9$ gleich oder verschieden sein kann und Kohlenwasserstoffrest mit 1 bis 6 Kohlenstoffatomen bedeutet.

Vorzugsweise sind die Reste A solche der Formel

$$R^{10}_2NR^{11}- \qquad \text{(X)},$$

worin $R^{10}$ gleich oder verschieden sein kann und Wasserstoff, Alkyl-, Cycloalkyl- oder Aminoalkylreste bedeutet und $R^{11}$ zweiwertiger Kohlenwasserstoffrest bedeutet.

Die Beispiele für Alkyl- und Cycloalkylreste R gelten im vollen Umfang auch für Alkyl- bzw. Cycloalkylreste $R^{10}$.

Vorzugsweise ist an jedes Stickstoffatom in den Resten der Formel (X) mindestens ein Wasserstoffatom gebunden;
Bevorzugt handelt es sich bei Rest $R^{11}$ um zweiwertige Kohlenwasserstoffreste mit 1 bis 10 Kohlenstoffatomen, besonders bevorzugt 1 bis 4 Kohlenstoffatomen, insbesondere um den n-Propylenrest.

Beispiele für Rest $R^{11}$ sind der Methylen-, Ethylen-, Propylen-, Butylen-, Cyclohexylen-, Octadecylen-, Phenylen- und Butenylenrest.

Beispiele für Reste A sind $H_2N (CH_2)_3$-, $H_2N (CH_2)_2NH (CH_2)_2$-, $H_2N(CH_2)_2NH (CH_2)_3$-, $H_2N (CH_2)_2$-, $H_3CNH (CH_2)_3$-, $C_2H_5NH(CH_2)_3$-, $H_3CNH(CH_2)_2$-, $C_2H_5NH(CH_2)_2$-, $H_2N(CH_2)_4$-, $H_2N(CH_2)_5$-, $H(NHCH_2CH_2)_3$-, $C_4H_9NH (CH_2)_2NH(CH_2)_2$-, cyclo-$C_6H_{11}NH(CH_2)_3$-, cyclo-$C_6H_{11}NH(CH_2)_2$-, $(CH_3)_2N(CH_2)_3$-, $(CH_3)_2N (CH_2)_2$-, $(C_2H_5)_2N (CH_2)_3$- und $(C_2H_5)_2N(CH_2)_2$-

Bevorzugt handelt es sich bei A um $H_2N (CH_2)_3$-, $H_2N(CH_2)_2NH(CH_2)_3$-, $H_3CNH(CH_2)_3$-, $C_2H_5NH(CH_2)_3$- und cyclo-$C_6H_{11}NH(CH_2)_3$-Rest, wobei $H_2N(CH_2)_2NH(CH_2)_3$- und cyclo-$C_6H_{11}NH(CH_2)_3$-Rest besonders bevorzugt sind.

Handelt es sich bei den Organosiliciumverbindungen aus Einheiten der Formel (VII) um Silane, so ist k bevorzugt 0, 1 oder 2, besonders bevorzugt 0 oder 1, 1 bevorzugt 1 oder 2, besonders bevorzugt 1, und m bevorzugt 1, 2 oder 3, besonders bevorzugt 2 oder 3, mit der Maßgabe, dass die Summe aus k+l+m gleich 4 ist.

Beispiele für die erfindungsgemäß gegebenenfalls eingesetzten Silane der Formel (VII) sind $H_2N(CH_2)_3$-Si $(OCH_3)_3$, $H_2N(CH_2)_3$-Si$(OC_2H_5)_3$, $H_2N (CH_2)_3$-Si $(OCH_3)_2CH_3$, $H_2N (CH_2)_3$-Si $(OC_2H_5)_2CH_3$, $H_2N(CH_2)_3$-Si$(OH)_{3-x}(OM)_x$, $H_2N (CH_2)_3$-Si$(OH)_{2-y}(OM)_yCH_3$, $H_2N (CH_2)_2NH (CH_2)_3$-Si $(OCH_3)_3$, $H_2N (CH_2)_2NH (CH_2)_3$-Si $(OC_2H_5)_3$, $H_2N (CH_2)_2NH (CH_2)_3$-Si $(OCH_3)_2CH_3$, $H_2N (CH_2)_2NH (CH_2)_3$-Si $(OC_2H_5)_2CH_3$, $H_2N (CH_2)_2NH (CH_2)_3$-Si $(OH)_{3-x}$ (OM) x, $H_2N (CH_2)_2NH (CH_2)_3$-Si $(OH)_{2-y}$ $(OM)_yCH_3$, cyclo-$C_6H_{11}NH (CH_2)_3$-Si $(OCH_3)_3$, cyclo-$C_6H_{11}NH (CH_2)_3$-Si $(OC_2H_5)_3$, cyclo-$C_6H_{11}NH (CH_2)_3$-Si $(OCH_3)_2CH_3$, cyclo-$C_6H_{11}NH (CH_2)_3$-Si $(OC_2H_5)_2CH_3$, cyclo-$C_6H_{11}NH (CH_2)_3$-Si $(OH)_{3-x}$, $(OM)_x$ und cyclo-$C_6H_{11}NH (CH_2)$ 3-Si (OH) 2-y $(OM)_yCH_3$, wobei $H_2N (CH_2)_2NH (CH_2)_3$-Si $(OCH_3)_3$, $H_2N (CH_2)_2NH (CH_2)_3$-Si $(C)C_2H_5)_3$, $H_2N (CH_2)_2NH (CH_2)_3$-Si $(OCH_3)$ $CH_3$, $H_2N (CH_2)_2NH (CH_2)_3$-Si $(OC_2H_5)_2CH_3$, $H_2N (CH_2)_2NH (CH_2)_3$-Si $(OH)_{3-x}$ $(ONa)_x$, $H_2N (CH_2)_2NH (CH_2)_3$-Si $(OH)_{2-y}$ $(ONa)_yCH_3$, cyclo-$C_6H_{11}NH (CH_2)_3$-Si $(OCH_3)_3$, cyclo-$C_6H_{11}NH (CH_2)_3$-Si $(OC_2H_5)_3$, cyclo-$C_6H_{11}NH (CH_2)_3$-Si $(OCH_3)_2CH_3$, cyclo-$C_6H_{11}NH (CH_2)_3$-Si $(OC_2H_5)_2CH_3$, cyclo-$C_6H_{11}NH (CH_2)_3$-Si $(OH)_{3-x}$ $(ONa)_x$ sowie cyclo-$C_6H_{11}NH (CH_2)_3$-Si $(OH)_{2-y}$ $(ONa)_yCH_3$ bevorzugt und $H_2N (CH_2)_2NH (CH_2)_3$-Si $(OCH_3)_3$, $H_2N (CH_2)_2NH (CH_2)_3$-Si $(OCH_3)_2CH_3$, cyclo-$C_6H_{11}NH (CH_2)_3$-Si

$(OCH_3)_3$, cyclo-$C_6H_{11}NH(CH_2)_3$-Si $(OCH_3)_2CH_3$, $H_2N(CH_2)_2NH(CH_2)_3$-Si $(OH)_{3-x}(ONa)_x$ und $H_2N(CH_2)_2NH(CH_2)_3$-Si $(OH)_{2-y}(ONa)_yCH_3$ besonders bevorzugt sind, mit x gleich 0, 1, 2 oder 3, y gleich 0, 1 oder 2 und M gleich Kation des Natriums oder Kaliums.

Silane der Formel (VII) sind handelsübliche Produkte bzw. können nach in der Siliciumchemie gängigen Verfahren hergestellt werden.

Falls es sich bei der Organosiliciumverbindung aus Einheiten der Formel (VII) um Organopolysiloxane handelt, ist der durchschnittliche Wert von k vorzugsweise zwischen 0,5 und 2,5, besonders bevorzugt zwischen 1,4 und 2,0, der durchschnittliche Wert von 1 vorzugsweise zwischen 0,01 und 1,0, besonders bevorzugt zwischen 0,01 und 0,6, und der durchschnittliche Wert von m vorzugsweise zwischen 0 und 2,0, besonders bevorzugt zwischen 0 und 0,2, mit der Maßgabe, dass die Summe aus k, l und m kleiner oder gleich 3 ist.

Die erfindungsgemäß gegebenenfalls eingesetzten Organopolysiloxane aus Einheiten der Formel (VII) haben eine Viskosität bei 25°C von vorzugsweise 5 bis $10^5$ mPas, besonders bevorzugt von 10 bis $10^4$ mPas.

Beispiele für die erfindungsgemäß gegebenenfalls eingesetzten Organopolysiloxane aus Einheiten der Formel (VII) sind die in DE 43 40 400 A1 (Wacker-Chemie GmbH; Offenlegungstag: 1. Juni 1995) auf Seite 6, Zeilen 15 bis 51 offenbarten Organopolysiloxane, die zum Offenbarungsgehalt der vorliegenden Erfindung zu zählen sind.

Organopolysiloxane aus Einheiten der Formel (VII) sind handelsübliche Produkte bzw. können nach in der Siliciumchemie gängigen Verfahren hergestellt werden.

Beispiele für Amine der Formel (VI) sind Cyclohexylamin, Triethylamin, Dodecylamin, Diethyl-n-propylamin, Cyclohexylmethylamin, 2-Aminoethanol, 2-Amino-n-propanol, 2-Amino-2-methyl-1-propanol, 2-Dimethylamino-2-methyl-1-propanol, N,N-Diethylethanolamin, Ethylendiamin, Cocosfettamin, Cocosfettmethylamin, N,N-Dimethylethanolamin und Anilin.

Falls Komponente (D) eingesetzt wird, handelt es sich bevorzugt um Organosiliciumverbindungen mit mindestens einem basischen Stickstoff aufweisenden organischen Rest aus Einheiten der Formel (VII), insbesondere um Kalium-N-(2-aminoethyl)-3-aminopropylmethylsilanolat und Natrium-N-(2-aminoethyl)-3-aminopropylmethylsilanolat.

Zur Herstellung der erfindungsgemäßen wässrigen Dispersionen von Organopolysiloxanen wird Komponente (D) bevorzugt eingesetzt, besonders bevorzugt in einer solchen Menge, dass der Gehalt an basischem Stickstoff vorzugsweise 0,01 bis 5 Gewichtsteile, besonders bevorzugt 0,01 bis 1 Gewichtsteile, insbesondere 0,04 bis 0,5 Gewichtsteile, jeweils bezogen auf 100 Gewichtsteile Organosiliciumverbindung (A), beträgt.

Des weiteren können die erfindungsgemäßen wässrigen Dispersionen von Organopolysiloxanen zusätzlich Füllstoffe (E) enthalten. Beispiele für Füllstoffe (E) sind nichtverstärkende Füllstoffe, wie zum Beispiel Füllstoffe mit einer BET-Oberfläche von bis zu 50 $m^2/g$, wie Quarz, Diatomeenerde, Calciumsilikat, Zirkoniumsilikat, Zeolithe, Aluminiumoxid, Titanoxid, Eisenoxid, Zinkoxid, Bariumsulfat, Calciumcarbonat, Gips, Siliciumnitrid, Siliciumcarbid, Bornitrid, Glas- und Kunststoffpulver. Ferner können als Füllstoffe auch die als Komponente (B) eingesetzten Feststoffpartikel und/oder deren Ausgangs-Partikel verwendet werden.

Falls Füllstoffe (E) eingesetzt werden, handelt es sich um Mengen von vorzugsweise 0,1 bis 200 Gewichtsteilen, besonders bevorzugt 0,5 bis 100 Gewichtsteilen, jeweils bezogen auf 100 Gewichtsteile Organosiliciumverbindung (A). Die eingesetzte Menge an Füllstoff (E) kann in weiten Bereichen variiert werden und richtet sich insbesondere nach dem jeweiligen Anwendungszweck der erfindungsgemäßen Dispersionen.

Ferner können die erfindungsgemäßen wässrigen Dispersionen von Organopolysiloxanen Zusatzstoffe (F), vorzugsweise ausgewählt aus der Gruppe der Haftvermittler, Weichmacher, Schaumverhütungsmittel, Thixotropier- und Dispergiermittel, Pigmente, lösliche Farbstoffe, Fungizide, Katalysatoren Riechstoffe sowie der organischen, in Bezug auf die Dispersionen inerten Lösungsmittel, enthalten.

Beispiele für Haftvermittler, die zur Verbesserung der Haftung der aus den erfindungsgemäßen wässrigen Dispersionen nach Entfernen ihrer Lösungsmittelanteile erhaltenen elastomeren Produkte auf dem Untergrund, auf dem die erfindungsgemäßen Dispersionen aufgebracht worden sind, zugesetzt werden, sind aminofunktionelle Silane, wie N-(2-Aminoethyl)-3-aminopropyltrialkoxysilane, bei denen der Alkoxyrest ein Methoxy-, Ethoxy-, n-Propoxy- oder Isopropoxyrest ist.

Beispiele für Weichmacher sind bei Raumtemperatur flüssige, durch Trimethylsiloxygruppen endblockierte Dimethylpolysiloxane mit einer Viskosität von mindestens 10 mPas bei 25°C.

Als Katalysatoren können alle bekannten die Bildung von Siloxanbindungen beschleunigenden Verbindungen verwendet werden. Beispiele für derartige Katalysatoren sind organische Zinnverbindungen wie Dibutylzinndilaurat, Dibutylzinndiacetat, Dibutylzinnoxid, Dioctylzinndilaurat, Dioctylzinndiacetat, Dioctylzinnoxid, sowie deren Umsetzungsprodukte mit Alkoxysilanen wie zum Beispiel Tetraethoxysilan. Weitere Beispiele für Katalysatoren sind Titanverbindungen wie Tetraisopropyltitanat, Tetrabutyltitanat und Titanchelate sowie die entsprechenden Zirkonium- oder Hafniumverbindungen.

Beispiele für organische, in Bezug auf die Dispersionen inerte Lösungsmittel sind Kohlenwasserstoffe, wie Petrolether verschiedener Siedebereiche, n-Pentan, n-Hexan, Hexan-Isomerengemisch, Toluol und Xylol.

Von jeder der vorstehend als mögliche Komponente für die erfindungsgemäßen wässrigen Dispersionen genannten Gruppen von Stoffen kann jeweils als eine Komponente ein Stoff dieser Gruppe oder auch ein Gemisch aus mindestens zwei verschiedenen dieser Stoffe verwendet werden.

Die erfindungsgemäßen wässrigen Dispersionen von Organopolysiloxanen besitzen vorzugsweise pH-Werte von 3 bis 13, bevorzugt 5 bis 13, besonders bevorzugt von 6 bis 11, ganz besonders bevorzugt 6 bis 9.

Bei den erfindungsgemäßen wässrigen Dispersionen von Organopolysiloxanen können Feststoffgehalte von bis zu 95 Gewichtsprozent erreicht werden. Niedrigere Feststoffgehalte sind selbstverständlich möglich. Selbst bei erfindungsgemäßen, wässrigen Silicondispersionen, die keine weiteren Füllstoffe enthalten, kann ein Feststoffgehalt von über 90% erzielt werden. Als Feststoffgehalt ist hier der Gewichtsanteil aller Bestandteile der Dispersion außer Wasser und, falls verwendet, organischem Lösungsmittel am Gesamtgewicht der Dispersion zu verstehen.

Die erfindungsgemäßen wässrigen Dispersionen von Organopolysiloxanen können je nach Anwendung standfest oder fließfähig sein.

Bevorzugt handelt es sich bei den erfindungsgemäßen Organosiloxandispersionen um solche, die hergestellt werden unter Verwendung der Komponenten (A), (B), (C), (D) sowie gegebenenfalls (E) und (F). Weitere Stoffe werden vorzugsweise nicht eingesetzt.

Grundsätzlich können die erfindungsgemäßen, wässrigen Dispersionen nach beliebigen, bisher bekannten Verfahren hergestellt werden, wie z.B. durch einfaches Vermischen der eingesetzten Komponenten.

Als wesentlich vereinfachte und damit ökonomische Herstellungsweise ergibt sich aus der erfindungsgemäßen Zusammensetzung der wässrigen Dispersionen von Organosiliciumverbindungen ein Verfahren (Verfahren 1), das dadurch gekennzeichnet ist, dass alle Bestandteile der Dispersion außer Füllstoff (E) miteinander vermischt und gemeinsam dispergiert werden. Danach kann, falls erwünscht, sofort der Füllstoff (E) in die Dispersion eingearbeitet werden.

Nach einer anderen Verfahrensweise (Verfahren 2) werden alle Bestandteile der Dispersion außer Komponente (D) und Füllstoff (E) miteinander vermischt und gemeinsam dispergiert. Danach werden gegebenenfalls Komponente (D) sowie gegebenenfalls Füllstoff (E) in die Dispersion eingearbeitet.

Nach einer anderen Verfahrensweise (Verfahren 3) wird Komponente (A1) vorgelegt, Komponente (A2) eingemischt sowie gegebenenfalls Komponenten (E) und (G) zugemischt. Sodann Wasser (C) vorgelegt, Partikel (B) dispergiert, dann Mischung A1+A2 mit gegebenenfalls (E) und (G) zugegeben und emulgiert; Danach werden gegebenenfalls Komponente (D) sowie gegebenenfalls Füllstoff (E) in die Dispersion eingearbeitet.

Nach einer anderen Verfahrensweise (Verfahren 4) wird Komponente (A1) vorgelegt, (A2) eingemischt und gegebenenfalls Komponenten (E) und (G) zugemischt. Sodann Partikel (B) vorgelegt und unter Rühren ein Aerosol von Wasser (C) zugemischt oder aufgesprüht. Anschließend werden Partikel (B) belegt mit Wasser (C) in Mischung (A1)+(A2)+ggf.(E)+ggf.(G) dispergiert und emulgiert. Gegebenenfalls kann anschließend zur Einstellung der gewünschten Eigenschaften, wie z.B. Viskosität, zusätzliches Wasser eingemischt werden bzw. überschüssiges Wasser mittels bekannter Techniken, wie z.B. Erwärmen, entfernt werden. Danach werden gegebenenfalls Komponente (D) sowie gegebenenfalls Füllstoff (E) in die Dispersion eingearbeitet.

Nach einer weiteren Verfahrensweise (Verfahren 5) wird (A1) vorgelegt, (A2) eingemischt, gegebenenfalls Komponenten (E) und (G) zugemischt. Sodann Wasser (C) vorgelegt und unter Rühren Partikel (B) in das Wasser (C) zugemischt. Anschließend wird die Mischung bestehend aus Partikel (B) und Wasser (C) in die Mischung (A1)+(A2)+ggf.(E)+ggf.(G dispergiert und emulgiert. Gegebenenfalls kann anschließend zur Einstellung der gewünschten Eigenschaften, wie z.B. Viskosität, zusätzliches Wasser eingemischt werden bzw. überschüssiges Wasser mittels bekannter Techniken, wie z.B. Erwärmen, entfernt werden. Danach werden gegebenenfalls Komponente (D) sowie gegebenenfalls Füllstoff (E) in die Dispersion eingearbeitet.

Nach einer anderen Verfahrensweise (Verfahren 6-3), (Verfahren 6-4) oder (Verfahren 6-5) werden gegebenenfalls Komponenten (D) und (F) zuerst in Wasser (C) gelöst und anschließend analog der Verfahrensvarianten 3, 4 oder 5 weiterverfahren.

Bevorzugt werden die erfindungsgemäßen Dispersionen von Organosiliciumverbindungen nach den erfindungsgemäßen Verfahrensvarianten 2, 3, 4, 5 und 6 hergestellt, wobei Verfahrensvariante 2 besonders bevorzugt ist.

Das Emulgieren bzw. Dispergieren kann in üblichen, zur Herstellung von Emulsionen bzw. Dispersionen geeigneten Mischgeräten, die einen ausreichend hohe Eintrag von Scherenergie leisten, wie beispielsweise schnellaufende Stator-Rotor-Rührgeräte, wie z.B. nach Prof. P. Willems, bekannt unter der Marke Ultra-Turrax® , oder anderen Stator-Rotor-Systemen, bekannt unter den Marken Kady, Unimix, Koruma, Cavitron, Sonotron, Netzsch, IKA oder Ystral, erfolgen. Andere mögliche Verfahren sind Ultraschallverfahren wie US Finger/Geber oder US Durchflusszellen oder US Systemen wie oder analog wie von Sonorex/Bandelin angeboten oder Kugelmühlen, wie z.B. Dyno-Mill von WAB, CH. Weitere mögliche Verfahren werden mit schnelllaufenden Rührern, wie Flügelrührer oder Balkenrührer, Dissolver wie Scheibendissolver z.B. der Firma Getzmann oder Mischsysteme wie Planetendissolver, Balkendissolver oder andere kombinierte Aggregate aus Dissolver- und Rührersystemen durchgeführt. Andere geeignete Systeme sind Extruder oder Kneter.

Die erfindungsgemäßen Verfahren können diskontinuierlich wie auch kontinuierlich durchgeführt werden.

Selbstverständlich kann die erfindungsgemäße Dispersion von Organosiliciumverbindungen auch auf andere

Weise hergestellt werden. Es hat sich jedoch gezeigt, dass die Verfahrensweise kritisch ist und z.B. nicht alle Herstellungsarten Dispersionen ergeben, die nach Entfernen von Wasser zu Elastomere führen.

Die erfindungsgemäßen Verfahren haben den Vorteil, dass sie sehr einfach in der Durchführung sind und wässrige Dispersionen mit sehr hohen Feststoffgehalten hergestellt werden können.

Die erfindungsgemäßsen wässrigen Dispersionen Organopolysiloxanen können für alle Zwecke eingesetzt werden, für die auch bisher wässrige Dispersionen verwendet werden. Insbesondere die erfindungsgemäßen wässrigen Dispersionen von Organosiliciumverbindungen können beispielsweise als Dichtungs- und Klebmassen, Farben, Anstrichsysteme und als elektrisch isolierende bzw. leitende, hydrophobe, klebrige Stoffe abweisende Beschichtungssysteme oder als Grundlage bzw. Zusätze zu solchen Systemen dienen.

Die erfindungsgemäßen wässrigen Dispersionen von Organopolysiloxanen, die nach Entfernen von Wasser vernetzen, härten schon bei Raumtemperatur innerhalb kurzer Zeit nach Verdampfen des Lösungsmittelanteils, d.h. des Wassers und ggf. organischen Lösungsmittels, zu Elastomeren oder Harzen aus.

Ein weiterer Gegenstand der vorliegenden Erfindung sind Formkörper hergestellt durch Vernetzung der erfindungsgemäßen Dispersionen auf der Basis von kondensationsfähigen Gruppen aufweisenden Organosiliciumverbindungen.

Die erfindungsgemäßen wässrigen Dispersionen haben den Vorteil, dass sie auf einfache Art und Weise hergestellt werden können.

Die erfindungsgemäßen wässrigen Dispersionen haben des weiteren den Vorteil, dass sie eine hohe Lagerstabilität aufweisen.

Die erfindungsgemäßen wässrigen Dispersionen haben ferner den Vorteil, dass auf organische Emulgatoren vollständig verzichtet werden kann, und damit u.a. die Wasserbeständigkeit der Kontaktflächen zwischen den erhaltenen Formkörpern und den Substraten stark verbessert wird.

Die erfindungsgemäßen wässrigen Dispersionen haben den Vorteil, dass sich deren Rheologie im Gegensatz zu bisher bekannten Systemen in Bereichen einstellen lässt, wie sie von den nichtwässrigen Systemen her bekannt sind.

Die erfindungsgemäßen wässrigen Dispersionen haben ferner den Vorteil, dass sich die mechanischen Eigenschaften der ausgehärteten Produkte in Bereichen bewegen, wie sie von den nichtwässrigen Systemen her bekannt sind.

Die erfindungsgemäßen wässrigen Dispersionen haben weiterhin den Vorteil, dass sie so formuliert werden können, dass keinerlei flüchtige organische Verbindungen an die Atmosphäre beim Aushärten abgegeben werden.

Die erfindungsgemäßen wässrigen Dispersionen haben weiterhin den Vorteil, dass sie auf vielen Substraten, wie beispielsweise Papier, Textilien, mineralischen Baustoffen, Kunststoffen, Holz und vielen anderen Unterlagen, festhaftende Überzüge bilden. Das Beschichten kann dabei z.B. durch Streichen, Walzen, Tauchen oder Spritzen erfolgen.

Als bevorzugtes Einsatzgebiet bieten sich die Verwendung als Dichtungsmassen, Klebmassen und Beschichtungsmaterialien an. Als Beispiele seien Fugendichtungsmassen für Fassaden und Gebäude sowie Fensterverglasungen genannt sowie der Einsatz als Dichtungsmassen im Sanitärbereich. Beispiele für Beschichtungen sind u.a. Fassadenbeschichtungen und -imprägnierungen, elastische Fassadenfarben, Textil- und Gewebebeschichtungen.

In den nachstehend beschriebenen Beispielen beziehen sich alle Angaben von Teilen und Prozentsätzen, falls nicht anders angegeben, auf das Gewicht. Des weiteren beziehen sich alle Viskositätsangaben auf eine Temperatur von 25°C. Sofern nicht anders angegeben, werden die nachstehenden Beispiele bei einem Druck der umgebenden Atmosphäre, also zwischen 900 und 1100 hPa, und bei Raumtemperatur, also bei etwa 22°C bzw. bei einer Temperatur, die sich beim Zusammengeben der Reaktanden bei Raumtemperatur ohne zusätzliche Heizung oder Kühlung einstellt, durchgeführt.

Die Elastomereigenschaften werden jeweils nach den folgenden, genormten Prüfungen ermittelt:

| | |
|---|---|
| Reißfestigkeit | DIN 53504 S2 |
| Reißdehnung | DIN 53504 S2 |
| Modul | DIN 53504 S2 |
| Shore-A-Härte | DIN 53505 |

**Beispiel 1**

Herstellung von Feststoffpartikel B1

100 g einer pyrogenen Kieselsäure mit einer spezifischen BET-Oberfläche, gemessen nach DIN 66131 und DIN 66132, von 200 $m^2/g$ (erhältlich bei Wacker-Chemie GmbH, D-München unter dem Namen Wacker HDK® N20) werden unter Rühren (mit 1000 UpM bei einem Rührflügeldurchmesser von 12,5 cm) fluidisiert, dann während 15 Minuten mit Stickstoffgas beaufschlagt und inertisiert, anschließend der Stickstoffstrom wieder abgestellt. Dann werden 2 g Dimethyldichlorsilan mit einer Zweistoffdüse als Aerosol in die fluidisierte Kieselsäur aufgesprüht, bei einer Temperatur

von ca. 25°C und einem Umgebungsdruck von ca. 1013 hPa. Nach 30 Minuten weiterem Rühren wird anschließend die so behandelte Kieselsäure für 2 Stunden bei 300°C in einem Ofen von 100 1 Rauminhalt getempert, unter leichtem Stickstoffstrom von 1000 1/h.

Erhalten wird eine weiße pulverförmige Kieselsäure mit folgenden Eigenschaften:

- Die Kieselsäure ist bedingt, aber nicht vollständig Wasser-benetzbar; dies zeigt sich dadurch, dass sich von der Kieselsäure nur 12 Gew.-% in Wasser mit einem Ultraturrax zu einer für einen Tag stabilen fließfähigen Masse einarbeiten lassen, unter den gleichen Bedingungen und zu gleicher Viskosität aber 24 Gew.-% der Ausgangskieselsäure (Wacker HDK® N20), die vollständig wasserbenetzbar ist.
- Weitere Eigenschaften der Kieselsäure sind in Tabelle 1 zusammengefaßt.

Tabelle 1:

| Eigenschaft | Kieselsäure B1 nach Beispiel 1 |
|---|---|
| BET-Oberfläche | 184 $m^2/g$ |
| Restgehalt an nicht silylierten Kieselsäure-Silanolgruppen | 80% |
| Kohlenstoffgehalt %C | 0,5 Gew.-% |
| Methanolzahl | 0 |
| Kontaktwinkel THETA Methode-1 gegen Wasser und Luft | 84° |
| Kontaktwinkel THETA Methode-2 gegen Wasser und Luft | 80° |
| Oberflächenenergie GAMMA | 69 $mJ/m^2$ |
| Dispersionsanteil der Oberflächenenergie GAMMA-s-D | 65 $mJ/m^2$ |

- Spezifische BET-Oberfläche, gemessen nach DIN 66131 und DIN 66132
- Restgehalt an nicht silylierten Kieselsäure-Silanolgruppen, erhalten als Quotient (a) der Menge der Kieselsäuresilanolgruppen, der wie o.g. hergestellten Kieselsäure dividiert durch die Menge der Kieselsäuresilanolgruppen der unbehandelten Ausgangskieselsäure (Wacker HDK® N20); die Menge der Kieselsäuresilanolgruppen wird durch Säure-Base-Titration bestimmt (analog G.W. Sears Anal. Chem, 28 (12), (1950), 1981). Methode: Säure-Base-Titration der in Wasser/Methanol = 50:50 supendierten Kieselsäure; Titration im Bereich oberhalb des pH-Bereichs des isoelektrischen Punktes und unterhalb des pH-Bereichs der Auflösung der Kieselsäure; unbehandelte Kieselsäure mit 100% SiOH (Kieselsäure-Oberflächensilanolgruppen): SiOH-phil = 1.8 SiOH / $nm^{2;}$ silylierte Kieselsäure: SiOH-silyl; Restgehalt an nicht silylierten Kieselsäure-Silanolgruppen: %SiOH = Si-OH-silyl/SiOH-phil*100%
- Kohlenstoffgehalt %C bestimmt mittels Elementaranalyse auf Kohlenstoff; Verbrennen der Probe bei über 1000°C im $O_2$-Strom, Detektion und Quantifizierung des entstehenden $CO_2$ mit IR; Gerät LECO 244
- Methanolzahl, gemessen wie folgt: Test (Volumen% MeOH in Wasser) der Benetzbarkeit mit Wasser-Methanol Gemischen = Methanolzahl (MZ): Einschütteln eines gleichen Volumens der Kieselsäure mit gleichem Volumen an Wasser-Methanol Gemisch; Start mit 0% Methanol; bei Nicht-Benetzung schwimmt Kieselsäure auf: Es ist ein Gemisch mit um 5Vol% höherem MeOH Gehalt zu verwenden; bei Benetzung sinkt Kieselsäure ein: Anteil MeOH (%) in Wasser gibt Methanolzahl (MZ)
- Kontaktwinkel THETA Methode-1 gegen Wasser, gemessen wie folgt: Der Kontaktwinkel der Partikel wird durch sorgfältiges Herstellen, mit üblichen Methoden, eines Presslings der Kieselsäure und anschließender Bestimmung des Kontaktwinkels gegen Wasser, hier ein aufliegender Wassertropfen aus bidestilliertem Wasser an Luft durch digitale Bildauswertung erhalten. Der Kontaktwinkel $\theta$ definiert das Verhältnis der Oberflächenspannungen und -energien $\gamma$ von Flüssigkeiten (1) und Feststoffen (s) in einem Gasraum (g) wie folgt.

$$\cos(\theta) = (\gamma(sl) - \gamma(sg)) / \gamma(lg)$$

Die Oberflächenenergie ($mJ/m^2$) eines Feststoffes ist dimensionsgleich mit der Oberflächenspannung einer Flüssigkeit (mN/m), da gilt [J] = [N*m].

- Kontaktwinkel THETA Methode-2 gegen Wasser, gemessen wie mittels Imbibitionsmethode unter Verwendung der Lucas-Washburn-Gleichung, beruhend auf dem Einsaugen von bekannten und definierten Flüssigkeit, mit bekannter Oberflächenspannung, in ein definiertes Haufwerk, wie hier ein schwach verdichteter Pressling aus der Kieselsäure mit offener Porosität größer 0,25 und Porenradius r. Die Aufsauggeschwindigkeit dh/dt, bzw. die Höhe der aufgesaugten Flüssigkeitssäule h, berechnet aus der Massenaufnahme m an Flüssigkeit durch das Partikelhaufwerk gegen die Zeit t,

sowie die Viskosität der aufgesaugten Flüssigkeit $\eta$ sowie die Oberflächenspannung $\gamma$ der aufgesaugten Flüssigkeit lassen bei bekanntem Partikelradius r mittels der Gleichung nach Lucas-Washburn (Washburn, E.W., Phys. Rev. 17, 273 (1921) und R. Lucas Kolloid Z. 23, 15 (1918)) den Wert Cosinus von $\theta$ ( cos ($\theta$) ) und damit den Kontakt- oder Randwinkel $\theta$ der Flüssigkeit gegen die Partikeloberfläche ermitteln; folgend J. Schoelkopf et al, J. Colloid. Interf. Sci. 227, 119-131 (2000)
Als Flüssigkeit mit bekannter Oberflächenspannung werden Methanol-Wasser-Mischungen der Mischungsverhältnisse (Volumen Methanol zu Volumen Wasser) 0:100, 5:95, 10:90, 15:85, 20:80, 25:75, 30:70, 35:65, 40:60, 45:55, 50:50, 55:45, 60:40, 65:35, 70:30, 75:25, 80:20, 85:15, 90:10, 95:5, 100:0 verwendet.

$$dh/dt = r * \gamma * \cos(\theta) / (4 * \eta)$$

und

$$h^2 = r * \gamma * t * \cos(\theta) / (2 * \eta)$$

t = A - m$^2$ Washburn-Gleichung

mit

t : Zeit m : Masse der angesaugten Flüssigkeit

$$A = \frac{\eta}{\{C \cdot \rho^2 \cdot \gamma \cdot \cos\vartheta\}}$$

$\eta$ : Viskosität der Flüssigkeit
$\rho$ : Dichte der Flüssigkeit
$\gamma$ : Oberflächenspannung der Flüssigkeit
$\vartheta$ : Randwinkel Flüssigkeit-Pulver
C : Faktor, nur abhängig von den geometrischen Eigenschaften des Pulvers und Probenrohrs

Eine Illustration des Messverfahrens ist in Figur 1a + 1b zu finden.
- Die Oberflächenenergie GAMMA kann für Partikel als kritische Oberflächenenergie GAMMA-krit mittels eines Zisman-Plots bestimmt werden, der wie in Figur 2 gegeben den jeweiligen Kontaktwinkel THETA der Kieselsäure gegen eine definierte Flüssigkeit, wie oben mit der Imbibitionsmethode bestimmt, gegen die Kontaktwinkel der jeweiligen Flüssigkeiten aufträgt
- Für Partikel wie pyrogene Kieselsäure die Agglomerate mit Schüttdichten $d_{SD}$ « 1 g/ml bildend, aber bestehend aus Primärpartikeln mit Materialdichten $d_{MD}$ > 1 g/ml, kann Einschütteln in Flüssigkeiten verschiedener Oberflächenspannung als Methode herangezogen werden: Bei Nichtbenetzung schwimmen die Partikel-Agglomerate auf; bei Benetzung wird. die Luft in den Agglomeraten verdrängt, und die Partikel-Agglomerate sinken ein. Bei Verwendung verschiedener Flüssigkeiten mit verschiedener Oberflächenspannung kann exakt die Oberflächenspannung einer Flüssigkeit ermittelt werden, bei der die Partikel-Agglomerate einsinken; diese liefert die kritische Oberflächenenergie $\gamma_{crit}$ als Maß für die Oberflächenenergie $\gamma$ der Partikel.
Die Methode kann auch dergestalt vereinfacht werden, dass die Oberflächenspannung von Wasser (72,5 mN/m) durch Zugabe von Methanol, Ethanol oder iso-Propanol verringert wird.
Typischerweise kann Wasser vorgelegt werden, eine bestimmte Menge an Partikel-Agglomeraten auf die Wasseroberfläche aufgelegt (schwimmend) und dann der Alkohol zutitriert, unter Rühren. Das Wasser zu Alkohol-Verhältnis bei Einsinken der Partikel-Agglomerate wird notiert und genau für dieses Verhältnis Wasser : Alkohol in einem getrennten Versuch mit Standardmethoden (Ringabreißmethode, Wilhelmy-Methode) die Oberflächenspannung bestimmt.
Effektiver, und wie hier durchgeführt, werden definierte Mischungen von Wasser mit Methanol hergestellt, und dann die Oberflächenspannungen dieser Gemische bestimmt werden. In einem getrennten Experiment werden diese Wasser : Methanol Mischungen mit definierten Mengen an Partikel-Agglomeraten überschichtet (beispielsweise in einem Volumenverhältnis 1:1) und unter definierten Bedingungen geschüttelt (beispielweise schwaches Schütteln mit der Hand

oder mit einem Taumelmischer für ca. 1 Minute). Bestimmt wird das Wasser:Methanol-Gemisch, bei dem die Partikel-Agglomerate eben noch nicht einsinken und das Wasser:Methanol-Gemisch mit höherem Methanolgehalt, bei dem die Partikel-Agglomerate eben einsinken. Die Oberflächenspannung des letzteren Methanol : Wasser-Gemisches liefert die kritische Oberflächenenergie $\gamma_{crit}$ als Maß für die Oberflächenenergie $\gamma$ der Partikel, wie in Tabelle 1 gegeben.

- Der Dispersions-Anteil der Oberflächenenergie gamma-s-D wird mit der Inversen Gaschromatographie und Alkanen als Sonden bestimmt, folgend "Inverse Gaschromatographie" - "Characterisation of Polymers and other Materials", 391 ACS Symposium Series, D R Lloyd, Th C Ward, H P Schreiber, Chapter 18, pp 248-261, ACS, Washington DC 1989, ISBN 0-8412-1610-X.

In einem 500 ml Edelstahlbecher werden 10 g vollentsalztes (VE) Wasser und 5 g der Feststoffpartikel B1, deren Herstellung oben beschrieben ist, mittels eines schnelllaufenden Stator-Rotor-Rührgeräte nach Prof. P. Willems, bekannt unter der Marke Ultra-Turrax® , vordispergiert. Zu dieser hochviskosen Mischung werden unter ständigem Mischen mittels Ultra-Turrax® eine Mischung von 75 g eines langkettigen OH-terminierten Polydimethylsiloxans mit einer Viskosität von 80000 mPas (käuflich erhältlich unter dem Namen "Polymer FD 80" bei Wacker-Chemie GmbH, D-München), 4 g eines Methylsiliconharzes der durchschnittlichen Formel $[(CH_3)_2SiO]_{0,2}[(CH_3)SiO_{3/2}]_{0,8}$ mit einem durchschnittlichen Molekulargewicht von 3000, einem durchschnittlichen Restethoxygehalt von 2,6 Gewichtsprozent, bezogen auf das Harzmolekül, und mit einer Viskosität von 110000 mPas und 4 g eines MQ-Harzes der durchschnittlichen Formel $[(CH_3)_3SiO_{1/2}]_{1,1}[SiO_2]$ mit einem durchschnittlichen Molekulargewicht von 2000 und einem durchschnittlichen Restethoxygehalt von 2,1 Gewichtsprozent, bezogen auf das Harzmolekül eindispergiert. Es entsteht eine hochviskose, standfeste, weiße, Öl-in-Wasser (o/w)-Emulsion mit einer Lagerstabilität in einem geschlossenen System bei Raumtemperatur von mindestens 12 Monaten.

Zu der so hergestellten standfesten Emulsion werden in einem Planetenmischer nacheinander 0,8 g N-(2-Aminoethyl)-3-aminopropyltrimethoxysilan, 0,8 g 2-Amino-2-methyl-1-propanol, 0,5 g Kalium-N-(2-aminoethyl)-3-aminopropylmethylsilanolat und 60 g gemahlenes Calciumcarbonat (käuflich erhältlich unter der Bezeichnung "OMYACARB®5-GU" bei der Fa. Omya, D-Köln) sowie weitere 15 g vollentsalztes Wasser zugegeben. Es wird eine cremig weiche, glatte, dauerhaft homogene standfeste Masse erhalten. Die Eigenschaften der Dispersion sind bei Lagerung unter Luftabschluss über einen Zeitraum von über 1 Jahr unverändert.

Aus der so erhaltenen Dispersion von Organopolysiloxanen werden 2 mm dicke Filme erzeugt, indem die wässrige Dispersion auf eine Oberfläche aus Polytetrafluorethylen aufgetragen und das Wasser bei Raumtemperatur verdampfen gelassen wird. Die sich bildenden trockenen, elastischen Filme, wurden nach 7 Tagen auf ihre Elastomereigenschaften hin untersucht. Die Filme zeigen eine Spannung bei 100% Dehnung von 0,32 MPa, eine Zugfestigkeit von 1,2 MPa, eine Shore-A-Härte von 18 und eine Reißdehnung von 620%.

**Beispiel 2**

Eine Mischung von 75 g eines langkettigen OH-terminierten Polydimethylsiloxans mit einer Viskosität von 80000 mPas (erhältlich unter dem Namen "Polymer FD 80" bei Wacker-Chemie GmbH, D-München), 4 g eines Methylsiliconharzes der durchschnittlichen Formel $[(CH_3)_2SiO]_{0,2}[(CH_3)\ SiO_{3/2}]_{0,8}$ mit einem durchschnittlichen Molekulargewicht von 3000, einem durchschnittlichen Restethoxygehalt von 2,6 Gewichtsprozent, bezogen auf das Harzmolekül, und mit einer Viskosität von 110000 mPas und 4 g eines MQ-Harzes der durchschnittlichen Formel $[(CH_3)_3SiO_{1/2}]_{1,1}$ $[SiO_2]$ mit einem durchschnittlichen Molekulargewicht von 2000 und einem durchschnittlichen Restethoxygehalt von 2,1 Gewichtsprozent, bezogen auf das Harzmolekül sowie 60 g gemahlenes Calciumcarbonat (käuflich erhältlich unter der Bezeichnung "OMYACARB®5-GU" bei der Fa. Omya, D-Köln) werden an einem Planetenmischer dispergiert. Zu dieser hochviskosen Mischung werden 15 g einer Mischung von 5 g Feststoffpartikel B1, deren Herstellung in Beispiel 1 beschrieben ist, und 10 g Wasser (VE) an einem Labo-Top Planetendissolver der Fa. PC Laborsystem, CH, eindispergiert und 1,5 Stunden nachgerührt. Es entsteht eine hochviskose, standfeste, weiße, Öl-in-Wasser (o/w)-Emulsion mit einer Lagerstabilität in einem geschlossenen System bei Raumtemperatur von mindestens 12 Monaten.

Zu der so hergestellten standfesten Emulsion werden in einem Planetenmischer nacheinander 0,8 g N-(2-Aminoethyl)-3-aminopropyltrimethoxysilan, 0,8 g 2-Amino-2-methyl-1-propanol, 0,5 g Kalium-N-(2-aminoethyl)-3-aminopropylmethylsilanolat sowie weitere 15 g vollentsalztes Wasser zugegeben. Es wird eine cremig weiche, glatte, dauerhaft homogene standfeste Masse erhalten. Die Eigenschaften der Dispersion sind bei Lagerung unter Luftabschluss über einen Zeitraum von über 1 Jahr unverändert.

Aus der so erhaltenen Dispersion von Organopolysiloxanen werden 2 mm dicke Filme erzeugt, indem die wässrige Dispersion auf eine Oberfläche aus Polytetrafluorethylen aufgetragen und das Wasser bei Raumtemperatur verdampfen gelassen wird. Die sich bildenden trockenen, elastischen Filme, wurden nach 7 Tagen auf ihre Elastomereigenschaften hin untersucht. Die Filme zeigen eine Spannung bei 100% Dehnung von 0,30 MPa, eine Zugfestigkeit von 1,1 MPa, eine Shore-A-Härte von 18 und eine Reißdehnung von 570%.

**Beispiel 3**

Eine Mischung von 75 g eines langkettigen OH-terminierten Polydimethylsiloxans mit einer Viskosität von 20000 mPas (erhältlich unter dem Namen "Polymer FD 20" bei Wacker-Chemie GmbH, D-München), 4 g eines MQ-Harzes der durchschnittlichen Formel $[(CH_3)_3SiO_{1/2}]_{1,1}[SiO_2]$ mit einem durchschnittlichen Molekulargewicht von 2000 und einem durchschnittlichen Restethoxygehalt von 2,1 Gewichtsprozent, bezogen auf das Harzmolekül sowie 60 g gemahlenes Calciumcarbonat (käuflich erhältlich unter der Bezeichnung "OMYACARB®5-GU" bei der Fa. Omya, D-Köln) werden an einem Planetenmischer dispergiert. Zu dieser hochviskosen Mischung werden 15 g einer Mischung von 5 g Feststoffpartikel B1, deren Herstellung in Beispiel 1 beschrieben ist, und 10 g Wasser (VE) an einem Labo-Top Planetendissolver der Fa. PC Laborsystem, CH, eindispergiert und 1,5 Stunden nachgerührt. Es entsteht eine hochviskose, standfeste, weiße, Öl-in-Wasser (o/w)-Emulsion mit einer Lagerstabilität in einem geschlossenen System bei Raumtemperatur von mindestens 12 Monaten.

Die weitere Compoundierung der so erhaltenen Emulsion erfolgt wie bei Beispiel 2 beschrieben. Es wird eine cremig weiche, glatte, dauerhaft homogene standfeste Masse erhalten. Die Eigenschaften der Dispersion sind bei Lagerung unter Luftabschluss über einen Zeitraum von über 1 Jahr unverändert.

Aus der so erhaltenen Dispersion von Organopolysiloxanen werden 2 mm dicke Filme erzeugt, indem die wässrige Dispersion auf eine Oberfläche aus Polytetrafluorethylen aufgetragen und das Wasser bei Raumtemperatur verdampfen gelassen wird. Die sich bildenden trockenen, elastischen Filme, wurden nach 7 Tagen auf ihre Elastomereigenschaften hin untersucht. Die Filme zeigen eine Spannung bei 100% Dehnung von 0,53 MPa, eine Zugfestigkeit von 1,5 MPa, eine Shore-A-Härte von 30 und eine Reißdehnung von 380%.

**Patentansprüche**

1. Wässrige Dispersionen herstellbar unter Verwendung von (A) Organosiliciumverbindungen, wobei es sich bei Komponente

   (A) zumindest zum Teil um kondensationsfähige Gruppen aufweisende Organosiliciumverbindungen handelt,
   (B) teilhydrophobierte Partikel, die zum Teil mit Wasser benetzbar sind und einen mittleren Durchmesser von 1 - 5000 nm aufweisen,
   (C) Wasser,
   (D) basischen Stickstoff aufweisenden Verbindungen und ggf. weiteren Stoffen.

2. Wässrige Dispersionen gemäß Anspruch 1, **dadurch gekennzeichnet, dass** sie im wesentlichen frei sind von herkömmlichen, bei Raumtemperatur und dem Druck der umgebenden Atmosphäre nicht-partikulären flüssigen und festen, rein organischen oberflächenaktiven Substanzen.

3. Wässrige Dispersionen gemäß Anspruch 1 oder 2, **dadurch gekennzeichnet, dass** es sich bei Komponente (A) um Organosiliciumverbindungen enthaltend Einheiten der Formel

   $$R_a(OR^1)_bX_cSiO_{(4-a-b-c)/2} \qquad (I)$$

   handelt, wobei
   R gleiche oder verschiedene sic-gebundene Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)glykolresten substituiert sind, wobei letztere aus Oxyethylen- und/oder Oxypropyleneinheiten aufgebaut sind, bedeutet,
   $R^1$ gleich oder verschieden sein kann und Wasserstoffatom oder gegebenenfalls substituierter Kohlenwaaserstoffrest, der mit Sauerstoffatomen unterbrochen sein kann, bedeutet,
   X gleich oder verschieden sein kann und Halogenatom, Pseudohalogenrest, Si-N-gebundene Aminreste, Amidreste, Oximreste, Aminoxyreste und Acyloxyreste bedeutet,
   a 0, 1, 2 oder 3 ist,
   b 0, 1, 2 oder 3 ist und
   c 0, 1, 2 oder 3 ist, mit der Maßgabe, dass die Summe aus a+b+c kleiner oder gleich 3 ist und pro Molekül mindestens eine Einheit vorhanden ist mit b verschieden 0.

4. Wässrige Dispersionen gemäß einem oder mehreren der Ansprüche 1 bis 3, **dadurch gekennzeichnet, dass** es sich bei Komponente (B) um teilhydrophobierte anorganische, zum Teil mit Wasser benetzbare Oxide handelt.

5. Wässrige Dispersionen gemäß einem oder mehreren der Ansprüche 1 bis 4, **dadurch gekennzeichnet, dass** sie Komponente (B) in Mengen von 0,1 bis 50 Gewichtsteilen, bezogen auf 100 Gewichtsteile gesamte Dispersion, enthalten.

6. Wässrige Dispersionen gemäß einem oder mehreren der Ansprüche 1 bis 5, **dadurch gekennzeichnet, dass** es sich um solche handelt, die herstellbar sind unter Verwendung der Ausgangsstoffe

(A) Organosiliciumverbindungen enthaltend Einheiten der Formel (I)
(B) teilhydrophobierte Partikel, die zum Teil mit Wasser benetzbar sind, und einen mittleren Durchmesser von 1 - 5000 nm aufweisen,
(C) Wasser,
(D) basischen Stickstoff aufweisende Verbindungen,
gegebenenfalls
(E) Füllstoffe,
gegebenenfalls
(F) Vernetzungskatalysatoren
und gegebenenfalls
(G) Additive.

7. Formkörper hergestellt durch Vernetzung der Dispersionen gemäß einem oder mehreren der Ansprüche 1 bis 6.

## Claims

1. Aqueous dispersions preparable using

(A) organosilicon compounds, component (A) comprising at least in part organosilicon compounds containing condensable groups,
(B) partly hydrophobicized particles which are partly wettable with water and have an average diameter of 1 - 5000 nm,
(C) water,
(D) compounds containing basic nitrogen and further substances if desired.

2. Aqueous dispersions according to Claim 1, **characterized in that** they are substantially free from conventional, purely organic surface-active substances which are solid or liquid and nonparticulate at room temperature under the pressure of the surrounding atmosphere.

3. Aqueous dispersions according to Claim 1 or 2, **characterized in that** component (A) comprises organosilicon compounds comprising units of the formula

$$R_a(OR^1)_bX_cSiO_{(4-a-b-c)/2} \qquad (I),$$

where
R denotes identical or different SiC-bonded hydrocarbon radicals having 1 to 18 carbon atoms, unsubstituted or substituted by halogen atoms, amino groups, ether groups, ester groups, epoxy groups, mercapto groups, cyano groups or (poly)glycol radicals, the latter being composed of oxyethylene and/or oxypropylene units,
$R^1$ can be identical or different and denotes hydrogen atom or unsubstituted or substituted hydrocarbon radical which can be interrupted by oxygen atoms,
X can be identical or different and denotes halogen atom, pseudohalogen radical, Si-N-bonded amine radicals, amide radicals, oxime radicals, aminoxy radicals and acyloxy radicals,
a is 0, 1, 2 or 3,
b is 0, 1, 2 or 3 and
c is 0, 1, 2 or 3, with the proviso that the sum of a+b+c is less than or equal to 3 and per molecule at least one unit is present where b is not 0.

4. Aqueous dispersions according to one or more of Claims 1 to 3, **characterized in that** component (B) comprises partly hydrophobicized inorganic, partly water-wettable oxides.

5. Aqueous dispersions according to one or more of Claims 1 to 4, **characterized in that** they comprise component (B) in amounts of from 0.1 to 50 parts by weight, based on 100 parts by weight of total dispersion.

6. Aqueous dispersions according to one or more of Claims 1 to 5, **characterized in that** they are those which are preparable using the following starting materials:

   (A) organosilicon compounds comprising units of the formula (I),
   (B) partly hydrophobicized particles which are partly wettable with water and have an average diameter of 1 - 5000 nm,
   (C) water,
   (D) compounds containing basic nitrogen,
   if desired
   (E) fillers,
   if desired
   (F) crosslinking catalysts,
   and if desired
   (G) additives.

7. Molding produced by crosslinking the dispersions according to one or more of Claims 1 to 6.

**Revendications**

1. Dispersions aqueuses pouvant être préparées en utilisant

   (A) des composés organosiliciés, où il s'agit, pour le composant (A), au moins en partie, de composés organosiliciés présentant des groupes condensables,
   (B) des particules partiellement hydrofugées qui sont en partie mouillables à l'eau et qui présentent un diamètre moyen de 1-5000 nm,
   (C) de l'eau,
   (D) des composés présentant de l'azote basique et le cas échéant d'autres substances.

2. Dispersions aqueuses selon la revendication 1, **caractérisées en ce qu'**elles sont sensiblement exemptes de substances tensioactives purement organiques, usuelles, non particulaires, liquides et solides à température ambiante et à la pression de l'atmosphère ambiante.

3. Dispersions aqueuses selon la revendication 1 ou 2, **caractérisées en ce qu'**il s'agit, pour le composant (A), de composés organosiliciés contenant des unités de formule

$$R_a(OR^1)_bX_cSiO_{(4-a-b-c)/2} \qquad (I)$$

   où

   R signifie des radicaux hydrocarbonés liés par SiC identiques ou différents, comprenant 1 à 18 atomes de carbone, qui sont le cas échéant substitués par des atomes d'halogène, des groupes amino, des groupes éther, des groupes ester, des groupes époxy, des groupes mercapto, des groupes cyano ou des radicaux (poly)glycol, ces derniers étant formés d'unités oxyéthylène et/ou oxypropylène,
   $R^1$ peut être identique ou différent et signifie un atome d'hydrogène ou un radical hydrocarboné le cas échéant substitué, qui peut être interrompu par des atomes d'oxygène,
   X peut être identique ou différent et signifie un atome d'halogène, un radical pseudohalogène, des radicaux amine liés par Si-N, des radicaux amide, des radicaux oxime, des radicaux aminoxy et des radicaux acyloxy,
   a vaut 0, 1, 2 ou 3,
   b vaut 0, 1, 2 ou 3 et
   c vaut 0, 1, 2 ou 3, sous réserve que la somme de a + b + c soit inférieure ou égale à 3 et qu'il existe par molécule au moins une unité dans laquelle b est différent de 0.

4. Dispersions aqueuses selon l'une ou plusieurs des revendications 1 à 3, **caractérisées en ce qu'**il s'agit, pour le composant (B), d'oxydes inorganiques partiellement hydrofugés, en partie mouillables à l'eau.

**5.** Dispersions aqueuses selon l'une ou plusieurs des revendications 1 à 4, **caractérisées en ce qu'**elles contiennent le composant (B) en des quantités de 0,1 à 50 parties en poids, par rapport à 100 parties en poids de dispersion totale.

**6.** Dispersions aqueuses selon l'une ou plusieurs des revendications 1 à 5, **caractérisées en ce qu'**il s'agit de dispersions qui peuvent être préparées avec utilisation des substances de départ

(A) des composés organosiliciés contenant des unités de formule (I),
(B) des particules partiellement hydrofugées qui sont en partie mouillables à l'eau et qui présentent un diamètre moyen de 1-5000 nm,
(C) de l'eau,
(D) des composés présentant de l'azote basique, le cas échéant
(E) des charges, le cas échéant
(F) des catalyseurs de réticulation et le cas échéant
(G) des additifs.

**7.** Corps façonnés, préparés par réticulation des dispersions selon l'une ou plusieurs des revendications 1 à 6.

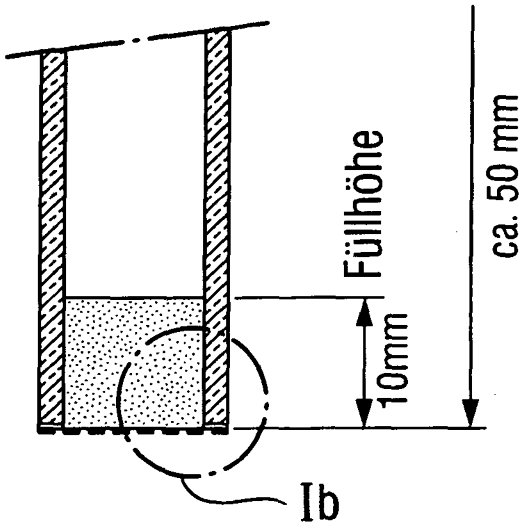


Fig. 1a

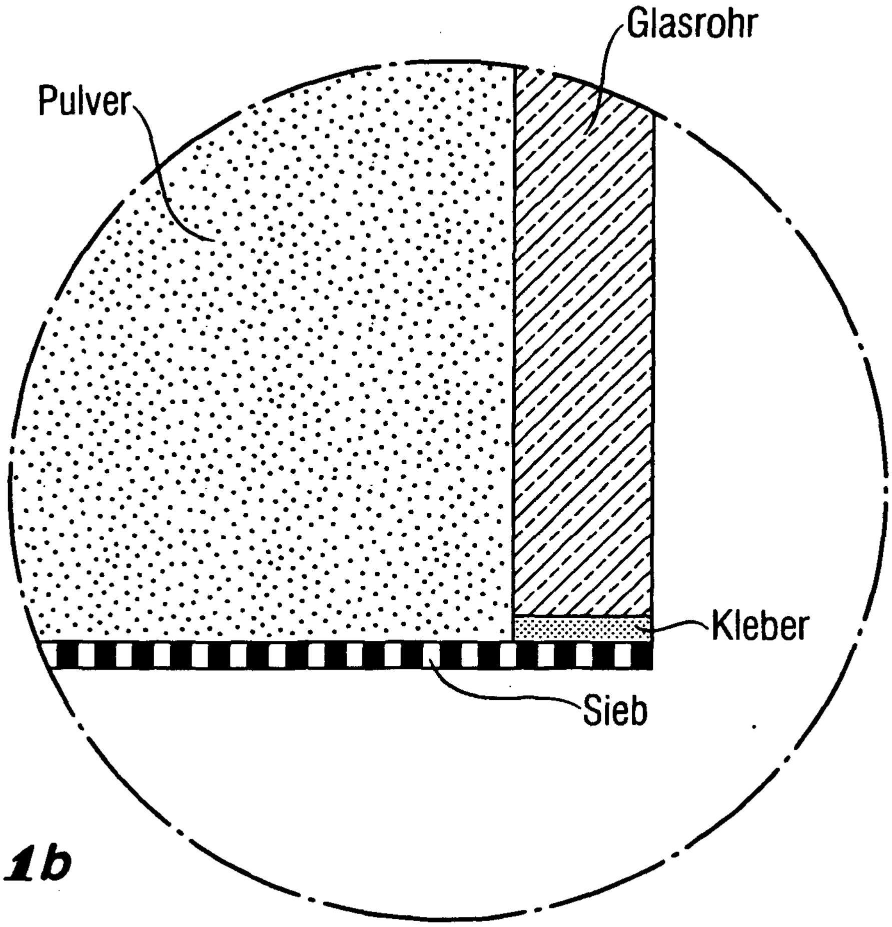


Fig. 1b

Fig. 2

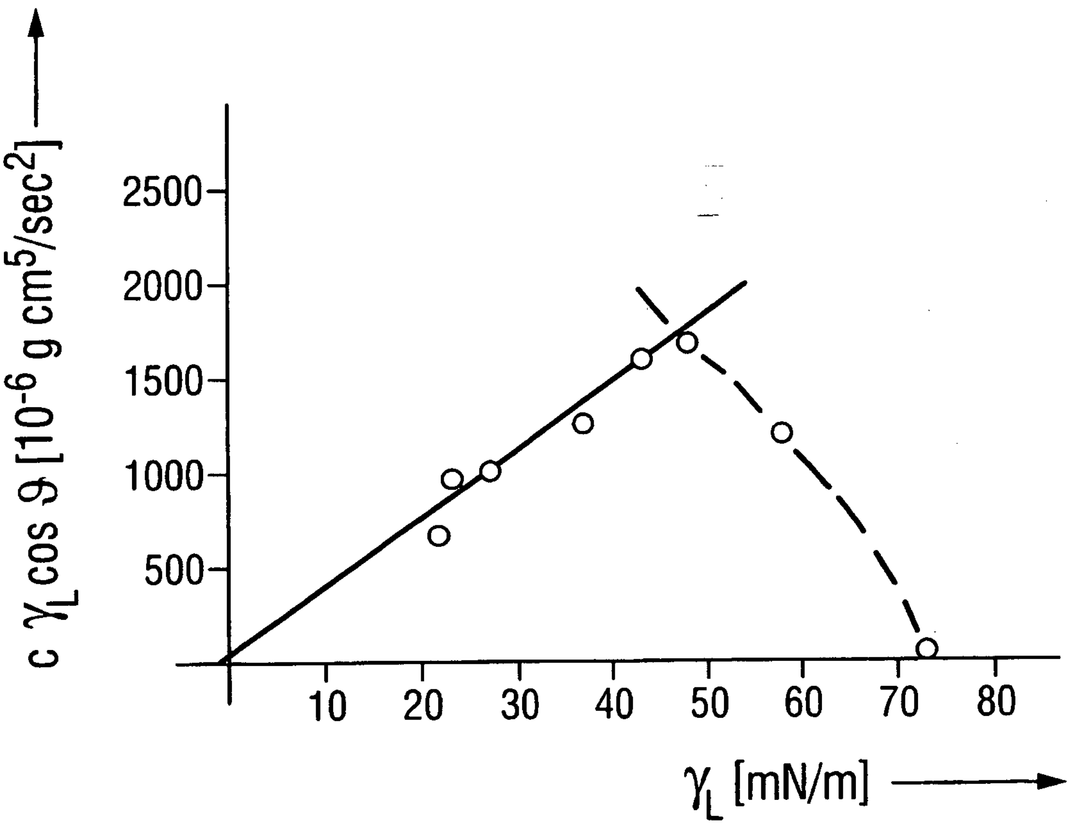
c $\gamma_L$ cos ϑ [$10^{-6}$ g $cm^5/sec^2$]
2500
2000
1500
1000
500
10
20
30
40
50
60
70
80
$\gamma_L$ [mN/m]

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 365439 A
- EP 665882 A
- US 4221688 A
- US 4427811 A
- US 5162429 A
- EP 1433749 A
- DE 4340400 A1


### In der Beschreibung aufgeführte Nicht-Patentliteratur


- Polymeren, Kolloide und Partikel. **MOLEKÜLEN.** Dispersionen und Emulsionen. 1997, 1-4
- Inverse Gaschromatographie. Characterisation of Polymers and other Materials. ACS, 1989, 248-261
- **G.W. SEARS.** *Anal. Chem,* 1950, vol. 28 (12), 1981
- **WASHBURN, E.W.** *Phys. Rev.,* 1921, vol. 17, 273
- **R. LUCAS.** *Kolloid Z.,* 1918, vol. 23, 15
- **J. SCHOELKOPF et al.** *J. Colloid. Interf. Sci.,* 2000, vol. 227, 119-131
- Inverse Gaschromatographie. Characterisation of Polymers and other Materials. ACS, 1991, 248-261